# EUROPEAN PATENT APPLICATION

(11) **EP 4 841 405 A1**
(43) Date of publication of application: **18.11.2026**
(21) Application number: 25305709.5
(22) Date of filing: 16.05.2025
(51) Int. Cl.: G06F 3/0362, G06F 3/041, G06F 3/046, G06F 3/039

(54) **USER BORNE DEVICE TRACKING**

(71) Applicant: Advanced Magnetic Interaction, AMI, 38170 Seyssinet-Pariset (FR)
(72) Inventor: Hautson, Tristan, 38170 Seyssinet-Pariset (FR); Pellerano, Vincent Thomas, 38170 Seyssinet-Pariset (FR); Jobert, Timothee, 38170 Seyssinet-Pariset (FR); Nussbaum, Victor, 38170 Seyssinet-Pariset (FR)
(74) Representative: Casalonga

(57) **Abstract**

A user borne device for use on an interaction surface of a tracking device is provided. The tracking device comprises a pressure sensor matrix and a plurality of magnetometers. The user borne device comprises a housing, a bottom, a magnetic object, a scroll manipulation feature and a click manipulation feature. The bottom defines a contact surface of the user borne device. The user borne device is configured to be operable on the interaction surface via the contact surface. The magnetic object is coupled to the housing and configured to create a magnetic field. The scroll manipulation feature and the click manipulation feature are actuatable by a user. One of the scroll manipulation feature and the click manipulation feature is operationally coupled to a contact feature. The contact feature is arranged and configured such that, upon actuation, the contact feature forms part of the contact surface of the user borne device.

## Description

### TECHNICAL FIELD

The present disclosure relates to the technical field of user borne device tracking systems. More specifically, the present disclosure relates to tracking devices which comprise a pressure sensor matrix and plurality of magnetometers for tracking the user borne device. Furthermore, a user borne device for use on an interaction surface of a tracking device for being tracked with the tracking device is disclosed.

### BACKGROUND

In the technical field of location determination and/or tracking of a device held or worn by user (i.e., a user borne device), the provision of a magnetometer sensing system (which includes a plurality of magnetometers) allows to measure a magnetic field associated with a magnetic object arranged in or coupled to the user borne device. The user borne devices using this technology may be electronically and/or electrically passive. More specifically, electrically passive means that the user borne device may not comprise a power source (e.g., batteries) and/or means to receive power (e.g., wireless power transmission via an inductive coil) for powering an electronic feature of the user borne device. Electronically passive means that no computation or processing occurs (or happens) on the user borne device. The magnetometer measurements enable determining and/or tracking of the location of the magnetic object within a sensing volume created by the plurality of magnetometers. The location may include a position and/or orientation of the magnetic object. In some applications, the magnetic object may be arranged, for instance, within a computer mouse (or other user borne device) which may be operated by a user on a surface (interaction surface) during a user operation. Based on the magnetic field measurements associated with the magnetic object, a location of the computer mouse relative to, particularly on, the interaction surface may be determined which may subsequently be used (e.g., processed) to track a movement or other manipulation of the user borne device. The principles of determining the location and/or tracking of a magnetic object with a plurality of magnetometers and the associated algorithms are already known in the prior art, for example in US 2013/249784 A1 or US 2020/116524 A1.

The determination and/or tracking of a location of a user borne device with a plurality of magnetometers may require the definition of an interaction surface on which the user-borne device may be operated or with respect to which the location of the user-borne device may be determined. In current applications, a magnetic object arranged in or coupled to a user-borne device may be approximated by a dipole to allow its location determination and/or tracking within a sensing volume created by the plurality of magnetometers. The magnetic object approximated as a dipole may create a magnetic field which is rotationally symmetric about at least one axis. The magnetic object approximated as a dipole may be modelized as a magnetic moment vector. Such a magnetic object may be manipulated by a user within the sensing volume and may allow a tracking and/or location determination of its movement in five degrees of freedom. The five degrees of freedom may include a translation of the magnetic object (and the user-borne device, to which the magnetic object is coupled to) along three axes, a first rotation about a first axis and a second rotation about a second axis. However, a rotation of the magnetic object about the at least one axis, to which the magnetic field is rotationally symmetric, may not be detectable. As a result, application fields and areas in passive accessory location determination and/or tracking may be limited. More specifically, certain movements of the magnetic object and/or of the user borne device may not be detectable and may limit specific additional functions of the user borne device.

In that regard, EP4375811A1 proposes solutions of how to integrate additional functions (such as scroll function and/or click function) in the user-borne device and how to extend application fields of the user borne device. One magnetic object or a respective magnetic object may be coupled to a scroll manipulation feature and to a click manipulation feature of the user borne device which are actuatable by a user. The actuation of a manipulation feature causes a specific movement of the magnetic object coupled thereto which is detectable by the system and indicative of a respective trigger event (click event or scroll event). Based on the respective trigger event (click event or scroll event) a respective additional function (scroll function or click function) can be provided. However, existing systems face challenges such as reliably detecting a trigger event, a required high precision of movement of the magnetic object, complex mechanics to move the magnetic object within the user borne device, a required high tracking accuracy of the plurality of magnetometers, complex structures for detecting both a trigger event and the location of the user borne device, as well as a risk of false detection.

The object of the present disclosure is to provide improved user borne device tracking with increased reliability.

### SUMMARY

The present disclosure relates to a user borne device according to claim 1. Furthermore, the present disclosure relates to tracking device according to claim 11, and to system comprising a tracking device and a user borne device according to claim 15. The dependent claims depict embodiments of the present disclosure.

According to a first aspect of the present disclosure, a user borne device for use on an interaction surface of a tracking device is provided. The tracking device comprises a pressure sensor matrix and a plurality of magnetometers. The user borne device comprises a housing, a magnetic object, at least one scroll manipulation feature and at least one click manipulation feature. The housing has a bottom. The bottom defines a contact surface of the user borne device. The user borne device is configured to be operable on the interaction surface via the contact surface. The magnetic object is coupled to the housing and configured to create a magnetic field. The at least one scroll manipulation feature and the at least one click manipulation feature are actuatable by a user. One of the at least one scroll manipulation feature and the at least one click manipulation feature is operationally coupled to at least one contact feature. The at least one contact feature is arranged and configured such that, at least upon actuation, the at least one contact feature forms part of the contact surface of the user borne device. These features may lead to several advantageous technical effects. By the coupling of "the one" of the manipulation features (click manipulation feature or scroll manipulation feature), "the other" of the manipulation feature (scroll manipulation feature or click manipulation feature) can be coupled either to another contact feature or to the magnetic object. The coupling to the contact feature enables to user a further source of information when used with the pressure sensor matrix of the tracking device, in addition to the magnetic field measurements. Thereby, different functions of the user borne device can be decorrelated compared to prior art systems which couple the manipulation features to magnetic objects. Furthermore, the contact surface of the user borne device may provide further information, such as the location (position and/or orientation) of the user borne device when used with the pressure sensor matrix of the tracking device. The decorrelation enables the integration of a higher number of functions into the user borne device as the functions are not limited by the degrees of freedom of the magnetic object. Additional characteristics of the user borne device may be estimated by combining information on the contact surface with information on the magnetic object. For instance, this may enable an enhanced and/or more reliable detection of a trigger event (e.g. click event and/or scroll event), a detection of contact of the user borne device with the interaction surface. The coupling of the one of the manipulation features to the contact feature enable less complex mechanics of the user borne device because no motion of the magnetic object is required when actuating "the one" of the manipulation features. The haptic feedback may be directly linked to the pressure detection. Using motion of the magnet can have event trigger and haptic feedback not synchronized. Furthermore, the risk of false detection may be reduced.

According to a second aspect of the present disclosure, a tracking device for tracking a user borne device is provided. The user borne device defines a contact surface and having a magnetic object. The tracking device comprises a pressure sensor matrix and a plurality of magnetometers. The pressure sensor matrix comprises a plurality of pressure pixels. The pressure sensor matrix defines an interaction surface on which the user borne device is operable via its contact surface. The pressure sensor matrix is configured to detect a pressure exerted on the interaction surface. The plurality of magnetometers is configured to obtain magnetic field measurements associated with the magnetic object. The tracking device is configured to determine a location of the magnetic object based on the obtained magnetic field measurements. The tracking device is configured to determine a pressure signature of the user borne device based on the detected pressure exerted on the interaction surface. The tracking device is further configured to identify at least one user borne device characteristic at least based on the determined pressure signature. The tracking system enables to detect at least one user borne device characteristic independently of the magnetic field measurements. Thereby, application fields of user borne device tracking may be expanded, and additional functions of user borne devices may be detectable. For instance, the tracking device may be able to determine one or more of the following user borne device characteristics based on the determined pressure signature:
- a position of the user borne device on the interaction surface ,
- an orientation of the user borne device in a plane defined by a first surface axis and a second surface axis of the interaction surface,
- a type of the user borne device,
- a contact of the user borne device, particularly its default contact surface, with the interaction surface,
- a trigger event initiated by a user manipulation of the at least one user-borne device (100), and/or
- a characteristic of a trigger event.

One or more further user borne device characteristics may be detectable based alone on the location of the magnetic object, or based on both the location of the magnetic object and the determined pressure signature.

According to a third aspect of the present disclosure, system for tracking a user borne device is provided. The system comprises the tracking device of the second aspect, and the user borne device. Particularly, the system comprises the user borne device according to the first aspect. When the user borne device is operated on the interaction surface, an exerted pressure of the user borne device is indicative of the at least one user borne device characteristic which is determinable by the system.

The above features, embodiments and advantageous technical effects described for the user borne device may also apply to the tracking device and the system.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different figures indicate like or similar features.
- **Fig. 1**: is a schematic view of a system for tracking a user-borne device according to a third aspect of the present disclosure including a tracking device according to the second aspect of the present disclosure and a user borne device according to the first aspect of the present disclosure;
- **Figs. 2a, 2b, and 2c**: show a first exemplary configuration of a user borne device on the interaction surface in an unactuated state, as well as the associated contact surface at the bottom and the associated pressure signature including a projection of the magnetic object;
- **Figs. 3a, 3b, and 3c**: show a first actuated state of the first exemplary configuration of Figs. 2, as well as the associated contact surface at the bottom and the associated pressure signature together with a projection of the magnetic object;
- **Figs. 4a, 4b, and 4c**: show a second actuated state of the first exemplary configuration of Figs. 2, as well as the associated contact surface at the bottom and the associated pressure signature together with a projection of the magnetic object;
- **Figs. 5a, 5b, and 5c**: show a second exemplary configuration of a user borne device on the interaction surface in an actuated state, as well as the associated contact surface at the bottom and the associated pressure signature together with a projection of the magnetic object;
- **Figs. 6a, 6b, and 6c**: show a third exemplary configuration of a user borne device on the interaction surface in an actuated state, as well as the associated contact surface at the bottom and the associated pressure signature together with a projection of the magnetic object;
- **Figs. 7a, 7b, and 7c**: show a fourth exemplary configuration of a user borne device on the interaction surface in an unactuated state, as well as the associated contact surface at the bottom and the associated pressure signature including a projection of the magnetic object;
- **Fig. 8a**: shows an actuated state of the fourth exemplary configuration of Figs. 7;
- **Fig. 8b**: shows the associated pressure signature together with a projection of the magnetic object of the fourth exemplary configuration of Figs. 7 in a first actuated state (click event);
- **Fig. 8c**: shows the associated pressure signature together with a projection of the magnetic object of the fourth exemplary configuration of Figs. 7 in a second actuated state (click event and scroll event);
- **Figs. 9a, 9b, and 9c**: show a fifth exemplary configuration of a user borne device on the interaction surface, as well as the associated contact surface at the bottom and the associated pressure signature including a projection of the magnetic object;
- **Figs. 10a and 10b**: show a sixth exemplary configuration of a user borne device on the interaction surface in a first state, as well as the associated pressure signature including a projection of the magnetic object;
- **Figs. 11a and 11b**: show the sixth exemplary configuration in a second state, as well as the associated pressure signature including a projection of the magnetic object;
- **Figs. 12a and 12b**: show a seventh exemplary configuration of a user borne device on the interaction surface in a first state, as well as the associated pressure signature including a projection of the magnetic object;
- **Figs. 13a and 13b**: show the seventh exemplary configuration in a second state, as well as the associated pressure signature including a projection of the magnetic object;
- **Figs. 14a and 14b**: show a eight exemplary configuration of a user borne device on the interaction surface in a first state, as well as the associated pressure signature including a projection of the magnetic object;
- **Figs. 15a and 15b**: show the eight exemplary configuration in a second state, as well as the associated pressure signature including a projection of the magnetic object;
- **Figs. 16a and 16b**: show a ninth exemplary configuration of a user borne device on the interaction surface in a first state, as well as the associated pressure signature including a projection of the magnetic object;
- **Figs. 17a and 17b**: show the ninth exemplary configuration in a second state, as well as the associated pressure signature including a projection of the magnetic object;
- **Figs. 18a to 18d**: show exemplary configurations of different default contact surfaces.
- **Fig. 19**: shows an exemplary alternative configuration of a user borne device on the interaction surface in an actuated state

### DETAILED DESCRIPTION

Embodiments of the user borne device, the tracking device and the system for tracking a user-borne device according to the present disclosure will be described in reference to the drawings as follows.

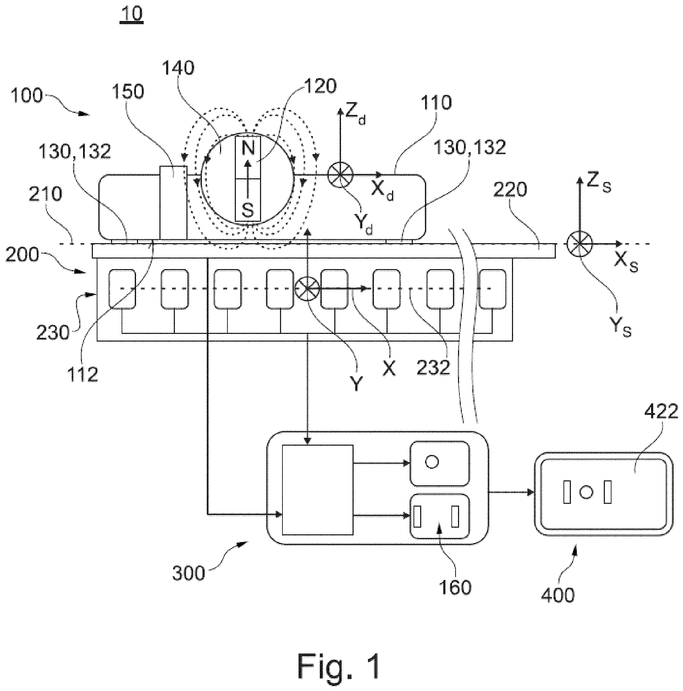

**Fig. 1** schematically illustrates a system 10 for tracking a user borne device 100 according to the third aspect. The system comprises a tracking device 200 according to the second aspect of the present disclosure, and a user borne device 100 according to the first aspect of the present disclosure. In the exemplary configuration according to Fig. 1, the user-borne device 100 is a computer mouse. In other embodiments, the user-borne device 100 may be of a different type, e.g. a dial, a keyboard, a toy, or a joystick.

The user borne device 100 of Fig. 1 comprises a housing 110, a magnetic object 120, at least one scroll manipulation feature 140 and at least one click manipulation feature 150. Specifically, the magnetic object 120 may be a permanent magnet. Specifically, the user borne device 100 may be electrically and/or electronically passive. Specifically, the user borne device may comprise only one magnetic object 120. Particularly, the user borne device 100 of Fig. 1 comprises one scroll manipulation feature 140 and one click manipulation feature 150. In other embodiments however, the user borne device 100 may comprise more than one (e.g. two or three or more) scroll manipulation feature 140 and/or more than one (e.g. two or three or more) click manipulation feature 150. In some alternative embodiments explained further below, the user borne device 100 may either comprise a scroll manipulation feature 140 or a click manipulation feature 150.

A scroll manipulation feature 140 and/or a click manipulation feature 150 may be generally denoted as a "manipulation feature" of the user borne device 100.

With further reference to **Fig. 1****,** the tracking device 200 comprises a pressure sensor matrix 220 and a plurality of magnetometers 230. The pressure sensor matrix 220 defines an interaction surface 210.

The interaction surface 210 may comprise a first surface axis xₛ, a second surface axis yₛ, and a vertical surface axis zₛ, more specifically wherein the axes may be orthogonal with respect to each other (see, e.g., Fig. 1). The first surface axis xₛ and the second surface axis yₛ may be defined on the interaction surface 210.

The user borne device 100 is operable on the interaction surface 210. More specifically, the housing 110 of the user borne device 100 has a bottom 112. The bottom 112 defines a contact surface 130 of the user borne device 100. The user borne device 100 is configured to be operable on the interaction surface 210 via the contact surface 130. In this regard, the user borne device 100 according to **Fig. 1** has two static contact features 132 which are formed by or fixedly arranged at the bottom 112. In other words, the static contact features 132 are elevated with respect to or protrude from the bottom 112. In **Fig. 1** the contact surface 130 is defined by the two static contact features 132. The housing 110 defines a first device axis x_{d}, a second device axis y_{d} orthogonal to the first device axis x_{d}, and a vertical device axis z_{d}. The contact surface 130 of the user borne device 100 lies in a surface plane of the user borne device 100. The surface plane is identical or parallel to a plane defined by the first device axis x_{d} and the second device axis y_{d}. The vertical device axis z_{d} is orthogonal to the surface plane of the user borne device 100. In use on the interaction surface 210, the surface plane may coincide with the interaction surface 210 (see, Fig. 1). In use on the interaction surface 210, the vertical device axis z_{d} is orthogonal to the interaction surface 210.

Particularly, the user borne device 100 is configured to be operable on the interaction surface 210 via the contact surface 130 in intended use. "In intended use" denotes the usual way/orientation in which the user borne device 100 shall be typically used for the respective type of user borne device 100. For instance a computer mouse shall be used with its bottom directed towards the interaction surface 210 and being in contact with the interaction surface 210 (similar for a dial), and not, for instance rotated by 90° about the first device axis x_{d}.

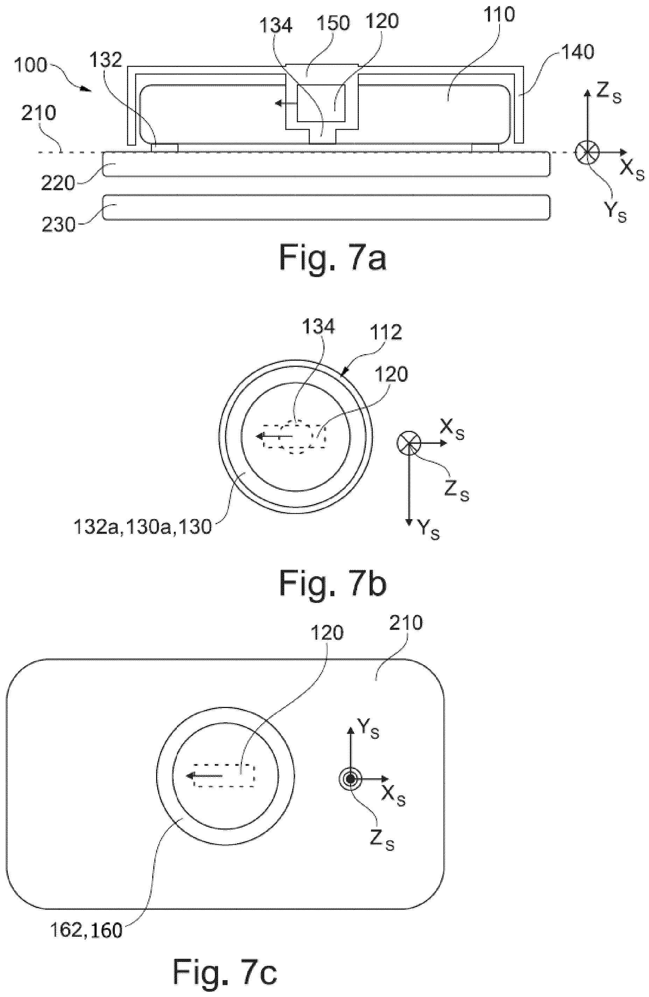

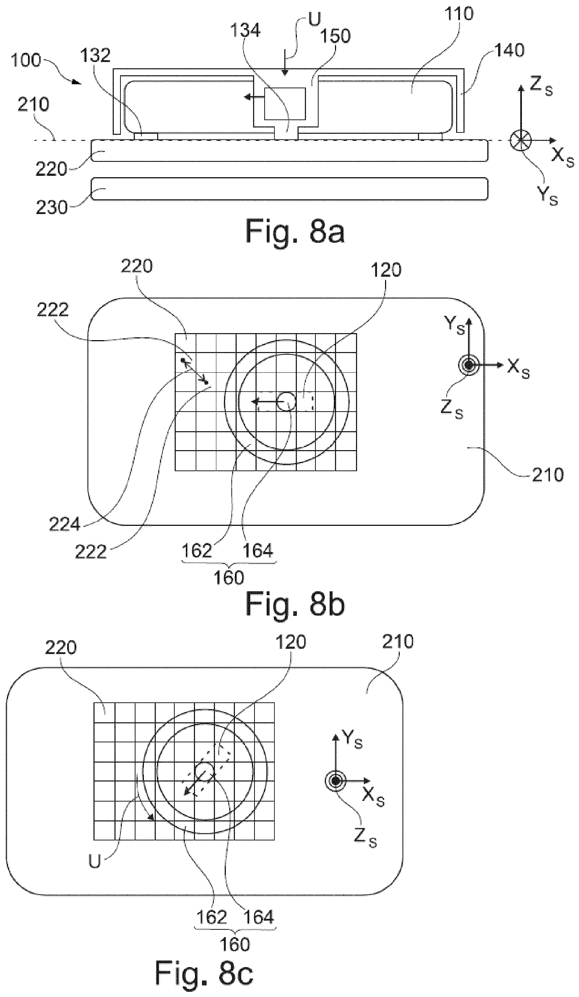

The pressure sensor matrix 220 comprises a plurality of pressure pixels 222 (see, e.g., **Fig. 8b, 8c****)** and is configured to detect a pressure exerted on the interaction surface 210. Specifically, the pressure sensor matrix 220 is configured to detect a pressure exerted on the interaction surface 210 by the user borne device 100. Particularly, the pressure exerted on the interaction surface 210 via the contact surface 130 of the user borne device 100. In some embodiments, the pressure matrix 220 may comprise an additional layer which may be arranged on a surface defined by the pressure pixels 222. The additional layer may define the interaction surface 210. The additional layer may be used to spread pressure exerted by the user borne device 100 on the pressure pixels 222. The additional layer may be used as a protective element for the pressure pixels 222 and/or as an interface that may affect the friction coefficient between the additional layer and the user borne device 100. The pressure sensor matrix 220 may be configured to detect a position and/or area of exerted pressure relative to the interaction surface 210 (i.e., spatial detection to derive pressure position information). The pressure sensor matrix 220 may be configured to detect a magnitude of exerted pressure (i.e., pressing force detection to derive pressure magnitude information). More specifically, the tracking device 200 is configured to determine a pressure signature 160 of the user borne device 100 based on the detected pressure exerted on the interaction surface 210. At least based on the determined pressure signature 160, the tracking device 200 is configured to identify at least one user borne device characteristic, such as a position of the user borne device 100 on the interaction surface 210. In other words, the exerted pressure of the user borne device 100 is indicative of the at least one user borne device characteristic which is determinable by the system 10. "At least based on the determined pressure signature 160" may in this regard be understood that at least one user borne device characteristic may be identifiable based on only the pressure signature 160, or based on the pressure signature 160 and further information (such as the location and/or magnetic strength of the magnetic object 120). For instance, in the case of the pressure signature 160 as shown in **Fig. 1****,** the orientation and the position of the user borne device 100 are identifiable based on the pressure signature 160 alone. In other examples, particularly depending on the configuration and/or type of the user borne device 100, specifically its contact surface 130, further information may be necessary to determine a specific user borne device characteristic. For instance in the dial embodiment of **Fig. 7a, 7b, 7c****,** further information is necessary to determine the orientation of the user borne device 100, while the position can be identified based on the pressure signature 160 alone.

Generally, the pressure signature 160 is indicative of that portion of the contact surface 130 which is in contact with the interaction surface 210. Generally, the pressure signature 160 may include pressure position information of that portion of the contact surface 130 which is in contact with the interaction surface 210. Pressure position information may comprise information, particularly spatial information, on each of the plurality of pressure pixels 222 of the pressure sensor matrix 220 which is activated in reaction to the exerted pressure. Specifically, pressure position information may comprise information on which pixels are activated and their position in the xₛ-yₛ plane of the interaction surface 210. In embodiments, a pressure pixel 222 may be determined to be "activated" if the pressure exerted on that pressure pixel 222 exceeds a minimum threshold. Generally, the pressure signature 160 may include pressure magnitude information of that portion of the contact surface 130 which is in contact with the interaction surface 210. Pressure magnitude information may comprise information on a magnitude of pressure exerted on the pressure sensor matrix 220. Specifically, pressure magnitude information may comprise information on a magnitude of pressure exerted on at least one, specifically on several, more specifically on all pressure pixels 222 of the pressure sensor matrix 220.

The at least one scroll manipulation feature 140 and the at least one click manipulation feature 150 are actuatable by a user U. Particularly, the at least one scroll manipulation feature 140 and/or the at least one click manipulation feature 150 may be arranged movably with respect to the housing 110. One of the at least one scroll manipulation feature 140 and the at least one click manipulation feature 150 is operationally coupled to at least one contact feature 132, 134, 136. The at least one contact feature 132, 134, 136 is arranged and configured such that, at least upon actuation, the at least one contact feature 132, 134, 136 forms part of the contact surface 130 of the user borne device 100. It is to be understood that only an actuation of "the one" of the manipulation features (scroll manipulation feature 140 or click manipulation feature 150) which is operationally coupled to the at least one contact feature 132, 134, 136 causes the at least one contact feature 132, 134, 136 to form part of the contact surface 130 (at least upon actuation). In the example of Fig. 1, the click manipulation feature 150 is operationally coupled to the at least one contact feature 132, 134, 136. Thus, the actuation of the click manipulation feature 150 causes the at least one contact feature 132, 134, 136 to form part of the contact surface 130 (at least upon actuation).

Generally, the at least one contact feature 132, 134, 136 may either be a static contact feature 132, a movable contact feature 134, or a slidable contact feature 136.

In the context of this disclosure a "static contact feature 132" may be understood as a contact feature which is not movable relative to the housing 110. A static contact feature 132 may always form part of the contact surface 130. In more detail, a static contact feature 132 may define a static contact surface 132a. In the context of this disclosure a "movable contact feature 134" may be understood as a contact feature which is movable relative to the housing 110. The movable contact feature 132 may be movable from a first position (or "non-contact position") in which it does not form part of the contact surface 130 to a second position (or "contact position") in which it does form part (i.e. an additional contact surface 134a) of the contact surface 130. The second position may be in the surface plane. In the context of this disclosure a "slidable contact feature 136" is to be understood as contact feature which is movable relative to the housing 110. In examples, the slidable contact feature 136 always forms part (i.e. a slidable contact surface 136a) of the contact surface 130. The slidable contact feature 136 may be movable along the bottom 112 of the user borne device 100, e.g. between a first end position and a second end position including various positions in between. In other words, the slidable contact feature 136 may be movable along a movement trajectory (between the first end position and the second end position). The movement trajectory of the slidable contact feature 136 is to be understood as lying in the surface plane. In other words, the slidable contact surface 136a may be movable along predefined positions in the surface plane. Particularly, the slidable contact surface 136a may be movable along predefined positions relative to the default contact surface 130a.

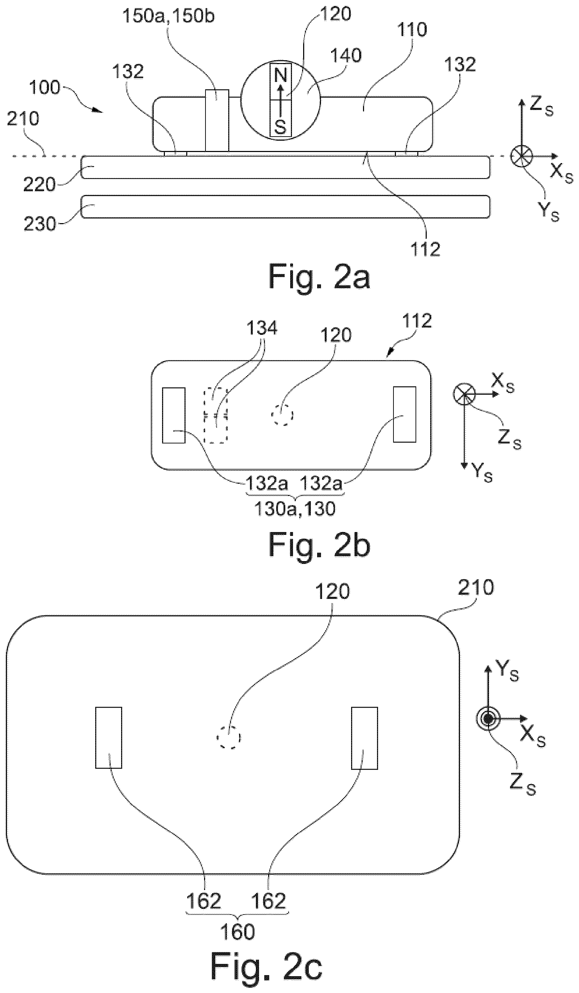

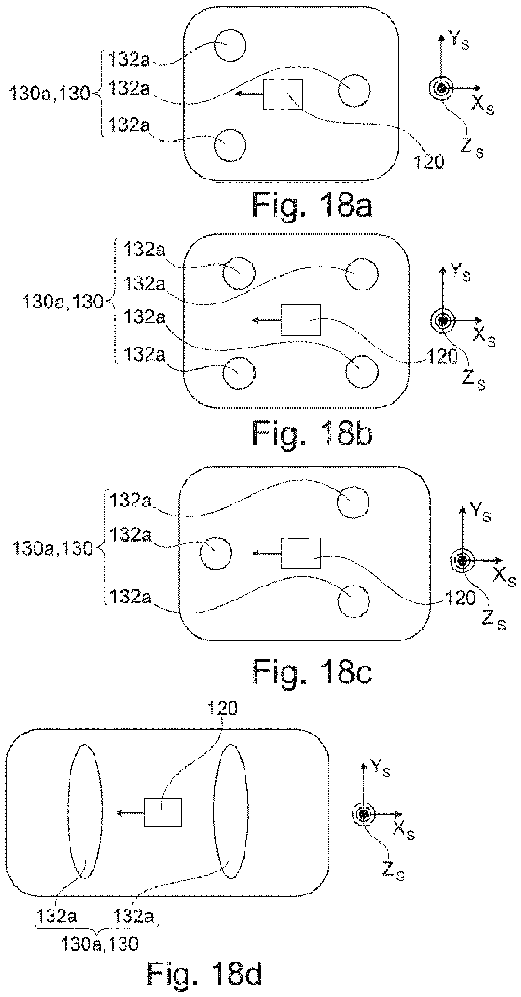

As mentioned above, the user borne device 100 according to **Fig. 1** has two static contact features 132 which define the contact surface 130 of the user borne device 100 in the shown state. More specifically, the contact surface 130 comprises a default contact surface 130a which is formed by the two static contact feature 132, specifically by the two static contact surfaces 132a (see, also **Figs. 2a, 2b, 2c****).** In the context of this disclosure the "default contact surface 130a" is to be understood as the contact surface 130 of the user borne device 100 which is present even when no manipulation feature 140, 150 is activated. If a slidable contact feature 136 is present, the slidable contact feature 136 is not to be understood as forming part of the default contact surface 130a. In other words, the default contact surface 130a is to be understood as being formed only by (one or more) static contact features 132. In other words, the default contact surface 130a may be formed by one or a plurality of static contact features 132. Particularly, the plurality of static contact features 132 (particularly the respective static contact surfaces 132a) may be configured and arranged (e.g. size, shape, relative position to each other, absolute position and/or number) to define a predefined default contact surface 130a indicative of a specific user borne device 100 and/or type of user borne device 100. Particularly, when the contact surface 130a is formed by one static contact feature 132, the one static contact feature 132 may be shaped and/or sized to define a predefined default contact surface 130a indicative of a specific user borne device 100 and/or type of user borne device 100 (see, e.g. example of **Figs. 7a, 7b, 7c****).** In other words a type and/or model specific default contact surface 130a can be provided. Further alternatively described, the default contact surface 130a may be configured uniquely for a specific user borne device 100, and/or for a specific type of user borne device 100. In other words, default contact surface 130a may be indicative of a specific user borne device 100 and/or of a specific type of user borne device 100. This enables to identify a user borne device 100, and/or type of user borne device 100, based on only the default contact surface 130a. In other words, if the pressure signature 160 comprises pressure position information corresponding to the default contact surface 130a as shown in **Fig. 1****,** the tracking device 200 can identify a specific user borne device 100, and/or a type of user borne device 100. In embodiments, the tracking device 200 can determine other user borne device characteristics based on the determination that the pressure signature 160 comprises pressure position information corresponding to the default contact surface 130a. For instance, the position and/or orientation (particularly, in the xₛ-yₛ plane of the interaction surface 210) of the user borne device 100 may be determined. In other examples, the determination that the pressure signature 160 comprises pressure position information corresponding to the default contact surface 130a may allow for reliable detection of a "proper" contact (i.e. as intended) of the user borne device 100 on the interaction surface 210. Although the default contact surface 130a in the examples of **Fig. 1** **or** **Figs. 2a, 2b, 2c** comprises only two static contact surfaces 132a (formed by two static contact features 132), in other embodiments, the default contact surface 130a may be formed by only by one or more than two static contact features 132. Depending on the number of static contact features 132, the default contact surface 130a may comprise one or several positionally separated contact regions (i.e. static contact surfaces 132a). In this regard, **Figs. 18a, 18b, 18c, 18d** show four exemplary configurations of different default contact surfaces 130a. Generally, the default contact surface 130a may be understood to remain constant with respect to total surface area and/or with respect to spatial distribution of the one or more static contact surfaces 132a. In comparison to that, the contact surface 130 denoted with reference sign 130 may be understood as a total contact surface comprising the default contact surface 130a, one or more additional contact surfaces 134a (if applicable), and one or more slidable contact surfaces 136 (if applicable). Depending on the actuation and/or configuration of the user borne device 100, the contact surface 130 may change with respect to total surface area and/or with respect to spatial distribution to thereby create a modified contact surface 130b.

In the example of **Fig. 1****,** the at least one contact feature 132, 134, 136 which is operationally coupled to the click manipulation feature 150 is a static contact feature 132 (left static contact feature 132 of Fig. 1). Thus, it always forms part of the contact surface 130. When the click manipulation feature 150 is actuated, the click manipulation feature 150 transmits force, e.g. via the housing 110, to the left static contact feature 132. The left static contact feature 132 exerts an increased pressure on the interaction surface 210 compared to an unactuated state (and/or compared to the right static contact feature 132 in Fig. 1). This increased pressure is detectable by the pressure sensor matrix 220. Based on the increased pressure, the tracking device 200 can determine that a click event occurred. Based on the click event a click function can be performed which will explained in further detail below. More generally, the actuation a manipulation feature which is coupled to a static contact feature 132 may cause a modification of the contact surface 130 and/or an increased pressure to be exerted on the interaction surface 210 via the static contact feature 132 (which is coupled to the actuated manipulation feature). The modification and/or increase in pressure magnitude may be detectable by the tracking device 200 to determine a trigger event (e.g. scroll event or click event as will explained in further detail below) associated with the actuated manipulation feature (e.g. scroll manipulation feature or click manipulation feature). In other words, the actuation of the manipulation feature may cause a change in pressure signature 160. The tracking device 200 may determine the change in the pressure signature 160. The change in pressure signature 160 may include further pressure pixels 222 to be activated and/or deactivated (deformation/enlargement of pressure region and contact region) and/or a (local) increase (and/or decrease) in pressure magnitude.

In other words, the tracking device 200 is configured to identify one or more increased pressure regions in the pressure signature 160 based on the pressure magnitude information. An "increased pressure region" may be defined by one or more adjacent activated pressure pixels 222 which exceed a first threshold. In some embodiments two activated pressure pixels 222 (which exceed the "first threshold") which are distanced by at most two pressure pixels pitches 224, in examples, distanced by at most one pressure pixel pitch 224, may still be assigned to the same "increased pressure region", even if pressure pixels 222 in between the pressure pixels 222 which exceed the first threshold may not exceed the first threshold. A "pressure pixel pitch 224" may be understood as the distance between two directly adjacent pressure pixels 222. The pressure pixel pitch 224 may refer to the distance between the centers of directly adjacent pixels 222 (see, **Fig. 8b****).** As pressure pixels 222 can have isolation/space between them, the pressure pixel pitch 224 may not be the same as the dimension of a pressure pixel 222. In some embodiments, only directly adjacent activated pressure pixels 222 (which exceed the "first threshold") may be assigned to the same "increased pressure region". In embodiments, "directly adjacent" may include directly adjacent in xₛ- and/or yₛ- direction and/or in a diagonal direction (via corners of the pressure pixels 222). Particularly, the first threshold may be higher than the minimum threshold. In some embodiments, the tracking device 200 may be configured to identify one or more decreased pressure regions based on pressure magnitude information. A "decreased pressure region" may be defined by one or more (directly) adjacent activated pressure pixels 222 which fall below a "second threshold" but still exceed the minimum threshold. The second threshold may be set between the minimum threshold and the first threshold. In some embodiments, the tracking device 200 may be configured to identify at least one user borne device characteristic by comparing the identified one or more increased pressure regions and/or the one or more decreased pressure regions with a database. By the ability to identify one or more increased pressure regions it is possible to use a static contact feature 132 for coupling with a manipulation feature 140, 150. Further, the tracking device 200 is able to distinguish between the default contact surface 130a which indicates a (proper) contact of the user borne device 100 with the interaction surface 210, and a trigger event caused by a static contact feature 132 resulting in an increased exerted pressure within at least part of the default contact surface 130a.

In embodiments, the tracking device 200 may be configured to identify at least one user borne device characteristic by comparing the identified one or more increased pressure regions with a database. The database may comprise data associating at least one user borne device characteristic with a specific position, size and/or form of one or more increased pressure regions and/or of one or more decreased pressure regions. The data may be predefined and/or recorded from a previous measurement.

More generally, the tracking device 200 may be configured to identify at least one user borne device characteristic by comparing the pressure magnitude information with a database. The database may comprise data associating at least one user borne device characteristic such as a characteristic of a trigger event (e.g. half/full click, fast/slow scroll) with a specific exerted pressure force, optionally in combination with pressure position information.

Generally, the at least one user borne device characteristic may comprise one or more of:
- a position of the user borne device 100 on the interaction surface 210,
- an orientation of the user borne device 100 in a plane defined by a first surface axis xₛ and a second surface axis yₛ of the interaction surface 210,
- a type of the user borne device 100,
- a contact of the user borne device 100, particularly its default contact surface 130a, with the interaction surface 210,
- a trigger event initiated by a user manipulation of the at least one user-borne device 100, and/or
- a characteristic of a trigger event.

**In** the context of this disclosure a "type of user borne device 100" may be for instance a computer mouse, a dial, a keyboard, a toy, or a joystick, and/or a specific model of any one of the aforementioned types (e.g. a first computer mouse model type or a second computer mouse model type).

Generally, a user manipulation of the user borne device 100 may include a manipulation of the location of the user-borne device 100 and/or a manipulation of one or more manipulation features (e.g. one or more scroll manipulation features 140 and/or one or more click manipulation features 150) of the user-borne device 100. The manipulation of the location of the user-borne device 100 may include a manipulation of an orientation of the user-borne device 100 and/or a manipulation of a position of the user-borne device 100. The manipulation of a manipulation feature may also be referred to as "actuation of a manipulation feature".

**In** the context of this disclosure a "trigger event" may be understood as a control mode of a function in a digital (or virtual) environment that is associated with a user input. Thus, a specific user input may be associated with a specific trigger event. As mentioned before a scroll event and a click event are examples of a trigger event. For example, when the scroll manipulation feature is actuated (i.e., a specific user input), the tracking device 200 is configured to determine a scroll event (i.e., a specific trigger event associated with the specific user input). Based on the determined scroll event, the tracking device is configured to provide a scroll function (i.e., a control mode of a function) in a digital environment. Analogously, based on a determined click event, the tracking device 200 is configured to provide a click function.

A scroll function may be applied to various different application fields. In examples, a scroll function may include a rotational and/or translational movement of a digital (or virtual) object in a digital (or virtual) environment that is associated with a user input. For instance, a scroll function may include scrolling of files or data, a rotational or translational movement of the virtual object associated with a selection of a choice from a plurality of choices. The scroll function associated include rotating a body in a virtual environment and/or changing a perspective in a digital (or virtual) environment. For instance, a scroll function may include one or more of moving a cursor in two opposing directions, moving a displayed element (e.g. a page, a cursor) which may be controlled by the user borne device 100, a step in a direction, flipping through a menu, flipping through a selection list, or adjusting (e.g. increasing or decreasing) a parameter (e.g. a setting or a configuration). This enables various new application fields for the user borne device 100, for instance a dial (e.g. a slidable button), a computer mouse scroll (e.g. a scroll wheel, a slidable button or a tiltable scroll button), a joystick, a control for an electronic device (e.g. an audio control or a visual control), a control of software settings or visualizations (e.g. graphic software or design software), or a control of a computer game. The functionality of the user borne device 100 is improved, more specifically e.g., without providing additional magnetic objects. Additionally, manufacturing costs can be reduced in comparison to user borne device 100 which do not unite additional functions in one device but require a separate device to control an additional function.

A click function may include a selection of an object, e.g., a selection of an item, a selection of a list, a selection of an item on a list. A click function may trigger a following action. A click function may trigger a clicking action, a selecting action, a dragging action and/or a dragging- and-dropping action of an item, object or a word. A click function may further trigger an action which provides additional information and/or properties of an object, item or word selected.

A "characteristic of a trigger event" may be understood as a further property of the trigger event (e.g. click event and/or scroll event). For instance, a characteristic of a scroll event may include a scroll up, a scroll down, a fast scroll, and/or a slow scroll. A characteristic of a click event may include a left click, a right click, a double click, a full click, and/or a half click.

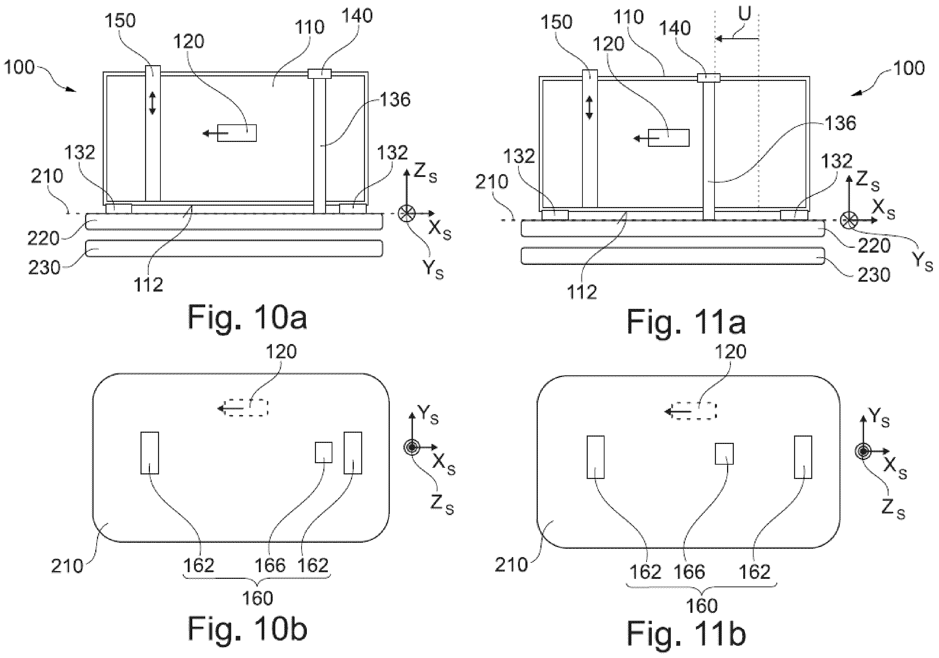

Generally a scroll manipulation feature 140 may be exemplary configured as a scroll wheel (see, Fig. 1), as a tiltable button (not shown, see e.g. EP4375811A1) or as a slidable button (see, Figs. 10 to 17). An actuation of the scroll manipulation feature 140 may cause or be indicative of a scroll event as mentioned above.

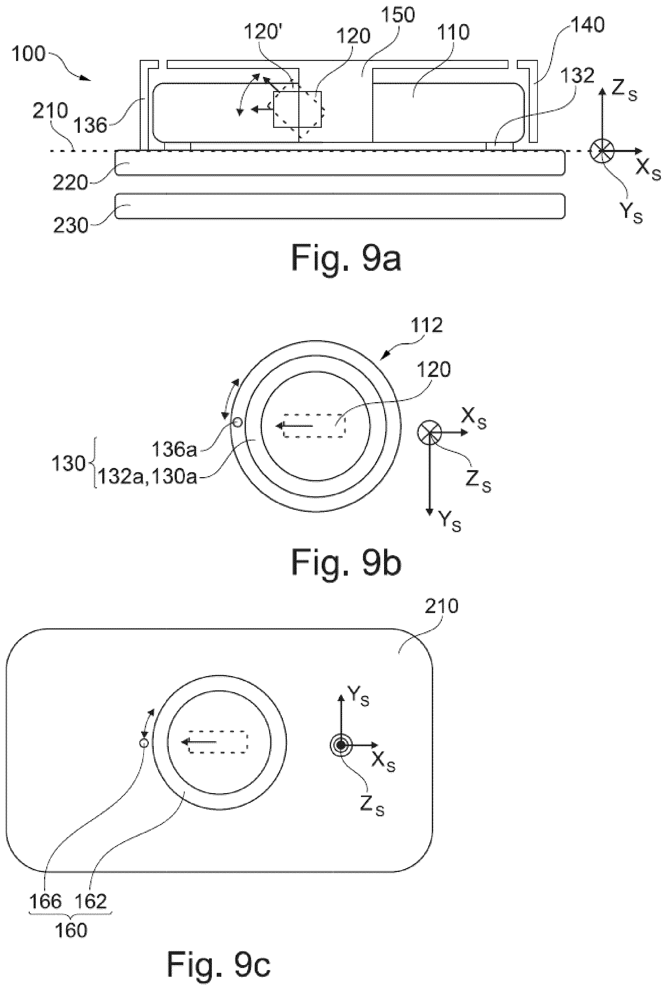

Generally a click manipulation feature 150 may be exemplary configured as a click button (see, e.g. Fig. 1 or 9a). Generally, a click manipulation feature 150 may be actuatable from an unactuated position to an actuated position. In some embodiments, the click manipulation feature 150 may comprise a biasing mechanism (e.g. a spring element). The biasing mechanism may be configured to bias the at least one click manipulation feature towards the unactuated position. In some embodiments, the biasing mechanism may comprise a feedback element. The feedback element may be configured to provide audible and/or tactile feedback to the user U. An actuation of a click manipulation feature 150 may cause or be indicative of a click event as mentioned above.

Again with reference to **Fig. 1****,** the magnetic object 120 is coupled to the housing 110 and configured to create a magnetic field. In the example of **Fig. 1****,** the magnetic object 120 is movably coupled to the housing 110. In the example of **Fig. 1****,** the scroll manipulation feature 140 is operationally coupled to the magnetic object 120 such that an actuation causes movement of the at least one magnetic object 120 with respect to the housing 110. Particularly, a movement of the magnetic object 120 may include a rotation and/or translation of the magnetic object 120 with respect to the housing 110, e.g. as is described in EP4375811A1.

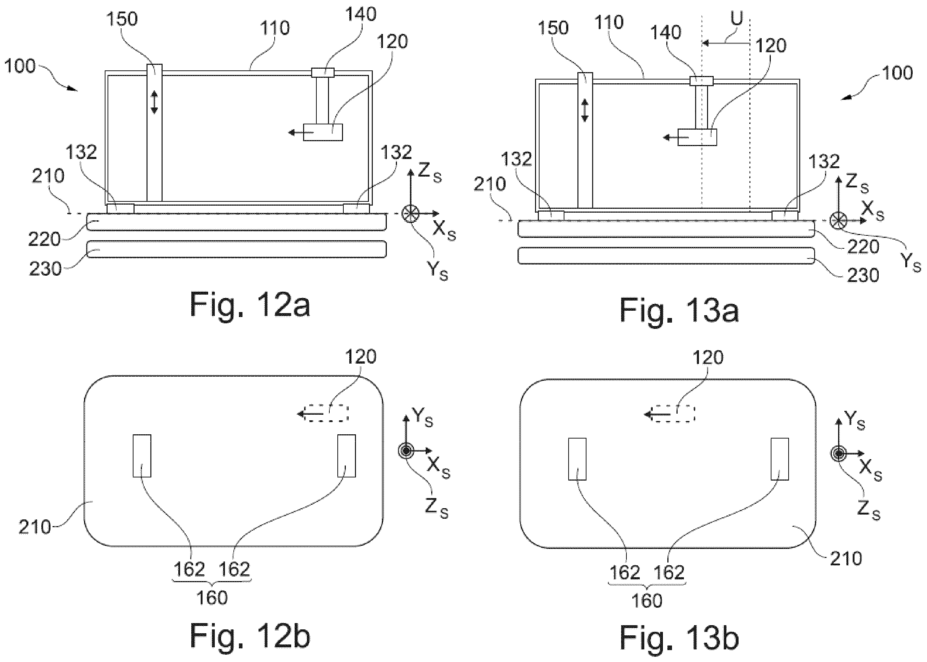

Particularly, the magnetic object 120 may be movable along a predefined movement trajectory. The contact surface 130 may be arranged at predefined positions relative to the movement trajectory and/or location of the at least one magnetic object 120. Particularly the contact surface 130 may be arranged at predefined positions relative to a projection of the movement trajectory on the surface plane or interaction surface 210. In Figs. 2b, 2c, 3b, 3c, 4b, 4c, 5b, 5c, 6b, 6c, 7b, 7c, 8b, 8c, 9b, 9c, 10b, 11b, 12b, 13b, 14b, 15b, 16b, 17b, the projection of the magnetic object 120 (including its magnetization direction) on the interaction surface 210 is depicted by the dashed object referenced with reference sign 120. Generally, the movement trajectory of the magnetic object 120 may include a rotation (see, e.g. Figs. 1, 2a, 3a, 4a, 5a, 6a, 7b, 7a, 8a, 8c, 9a, 16a, 17a) and/or a translation (see, e.g. Figs. 12a, 13a, 14a, 15a,) of the magnetic object 120.

The plurality of magnetometers 230 are configured to obtain magnetic field measurements associated with the magnetic object 120. The tracking device 200 is configured to determine a location of the magnetic object 120 based on the obtained magnetic field measurements. The plurality of magnetometers 230 may be configured to create a sensing volume. Specifically, the magnetometers may be tri-axis magnetometers. A tri-axis magnetometer is a magnetometer able to measure the projection of the magnetic field on three non-collinear measuring axes. Such a magnetometer measures the direction of the magnetic field. In addition, generally, this magnetometer also measures the amplitude or the norm of the magnetic field. The plurality of magnetometers 230 may be associated with a magnetometer plane. More specifically, the magnetometer plane may be defined by a plane that may extend through a majority of the plurality of magnetometers 230. As shown particularly in **Fig. 1****,** the tracking device 200 may define a reference coordinate system XYZ. The plurality of magnetometers 230 may be associated with the reference coordinate system XYZ. The tracking device 200 is configured to define the reference coordinate system XYZ relative to the plurality of magnetometers 230. The reference coordinate system XYZ may comprise a first reference axis X, a second reference axis Y and a vertical reference axis Z. The first reference axis X and the second reference axis Y may be orthogonal to each other. The vertical reference axis Z may be orthogonal to the first reference axis X and the second reference axis Y. The vertical reference axis Z may extend through a center of the plurality of magnetometers 230. In embodiments, the first reference axis X and the second reference axis Y may be defined on the magnetometer plane. In this case, the vertical reference axis Z may be orthogonal to the magnetometer plane.

In detail, the plurality of magnetometers 230 is configured to obtain magnetic field measurements which are indicative of a magnetic field associated with the magnetic object 120. The tracking device 200 may comprise or may be connectable to a processing unit 300. The processing unit 300 may be configured to determine the pressure signature 160. The processing unit 300 may be configured to determine the location of the magnetic object 120.

Determining a location of the magnetic object 120 may comprise determining a position and/or orientation of the magnetic object 120. The tracking device 200, specifically the processing unit 300, may be configured to determine an absolute magnetic object location indicative of an absolute magnetic object position and/or an absolute magnetic object orientation of the magnetic object 120 relative to the reference coordinate system X, Y, Z. More specifically, the absolute magnetic object location may be determined based on obtained magnetic field measurements. The tracking device 200, specifically the processing unit 300, may be configured to generate magnetic field measurement data based on obtained magnetic field measurements. The magnetic field measurement data is indicative of a magnetic moment vector of the magnetic object 120 relative to the reference coordinate system X, Y, Z. The magnetic moment vector may be indicative of a magnetic field orientation (in other words the direction of the magnetic field) and a magnetic field strength (in other words the amplitude or norm of the magnetic field or simply magnetic strength) of the magnetic object 120. In **Fig. 1** (and similarly in the other figures), the magnetic moment vector of the magnetic object 120 is schematically indicated by the arrow emerging upwardly from the magnetic object 120 parallel to axis Z. The processing unit 300 may be configured to determine the absolute magnetic object location by processing magnetic field measurement data to relate magnetic field measurement data to an absolute magnetic object location. In more detail, the absolute magnetic object location may include a magnetic object moment vector and/or a magnetic object position vector associated with the magnetic object 120. The magnetic object moment vector may be indicative of a magnetic object orientation and a magnetic field strength of the at least one magnetic object 120 as mentioned above. The magnetic object position vector may be indicative of a magnetic object position with respect to the reference coordinate system X, Y, Z. Based on a location of the interaction surface 210 with respect to the reference coordinate system X, Y, Z a location of the user borne device 20 with respect to the interaction surface 210, more specifically the first surface axis xₛ, a second surface axis yₛ, and a vertical surface axis zₛ, may be obtained. This enables to determine a projection of the magnetic object 120 on the interaction surface 210, more specifically to determine a location of the magnetic object 120 with respect to the contact surface 130.

In some embodiments, as shown in **Fig. 1****,** the system 10 may further comprise an output device 400. The output device 400 may be configured to visually reproduce the user borne device 100 as a virtual object. In embodiments, the system 10 may be configured to reproduce a pressure signature 160 and a location of the at least one magnetic object 120 on the output device 400. In embodiments, the output device 400 may comprise one or more of a display, a screen, a light, a domotic peripheral, a laptop, a smartphone, a tablet, or a control panel.

In some embodiments, during a user operation, the system 10 may be configured to track a location and/or manipulation of the user borne device 100 on the interaction surface 210 over a time period. As mentioned before a manipulation of the user borne device 100 may include a manipulation of a location of the user borne device 100 and/or an actuation of a scroll manipulation feature 140 and/or actuation of a click manipulation feature 150. A manipulation of the location (or movement) of the user borne device 100 may include a change in location (position and/or orientation) of the user borne device 100, particularly its housing 110.

In some embodiments, the system 10 may further comprise an electronics device. The tracking device 200 may be arranged at or in a device body of the electronic device. The electronics device may comprise or be a notebook, a laptop, a smartphone, a screen, a board or a tablet.

Although, the magnetic object 120 is movably coupled to the housing 110 in the example of **Fig. 1****,** in other examples, the magnetic object 120 may not be movably coupled to housing 110 (see, e.g. **Figs. 10a, 10b, 11a, 11b****)** or may be coupled to a different manipulation feature (see, e.g. **Fig. 9a, 9b, 9c****).**

Similarly, although the click manipulation feature 150 is operationally coupled to a static contact feature 132 in the example of **Fig. 1****,** in other examples, the click manipulation feature 150 may be operationally coupled to the magnetic object 120, to a movable contact feature 134 or to a slidable contact feature 136.

Generally expressed, one of the at least one scroll manipulation feature 140 and the at least one click manipulation feature 150 (also denoted "the one manipulation feature 140, 150") may be operationally coupled to the at least one contact feature 132, 134, 136, and the other of the at least one scroll manipulation feature 140 and the at least one click manipulation feature 150 (also denoted "the other manipulation feature 140, 150") may be coupled either to at least one other contact feature 132, 134, 136, or to the magnetic object 120 (in such cases the magnetic object 120 may be movably coupled to the housing 110). If the other manipulation feature 140, 150 is coupled to at least one other contact feature 132, 134, 136, the at least one other contact feature 132, 134, 136 may be arranged and configured such that at least upon actuation the at least one other contact feature 132, 134, 136 forms part of the contact surface 130 of the user borne device 100. For instance if the at least one contact feature 132, 134, 136, (e.g. at least one movable contact feature 134) is coupled to the scroll manipulation feature 140, the at least one other contact feature 132, 134, 136 being coupled to the click manipulation feature 150 may be configured as a static contact feature 132, a movable contact feature 134, or a slidable contact feature 136. In another example, if the at least one contact feature 132, 134, 136, (e.g. at least one movable contact feature 134) is coupled to the click manipulation feature 150, the at least one other contact feature 132, 134, 136 being coupled to the scroll manipulation feature 140 may be configured as a movable contact feature 134 or a slidable contact feature 136.

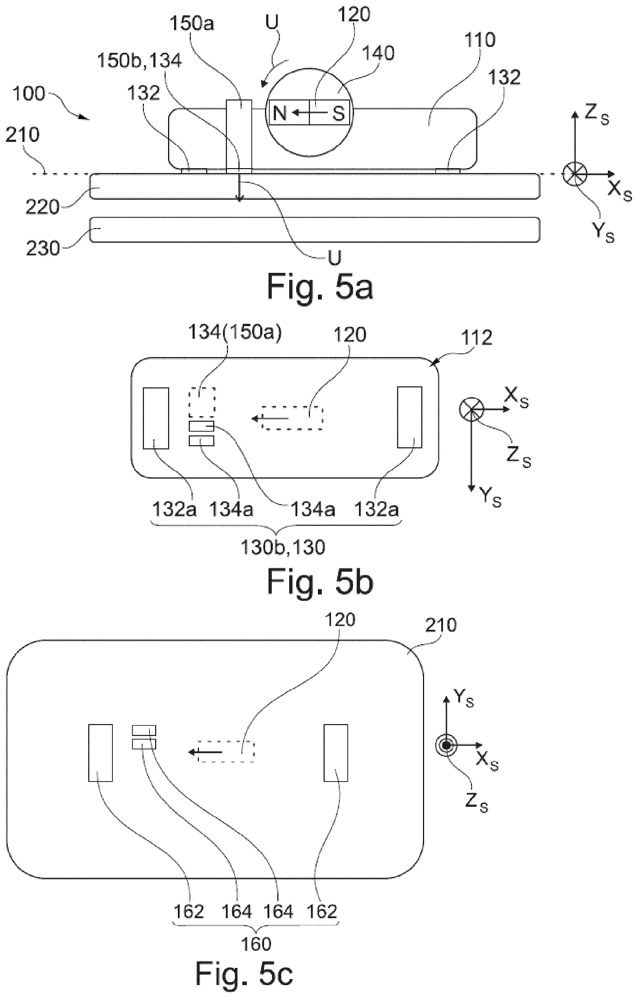

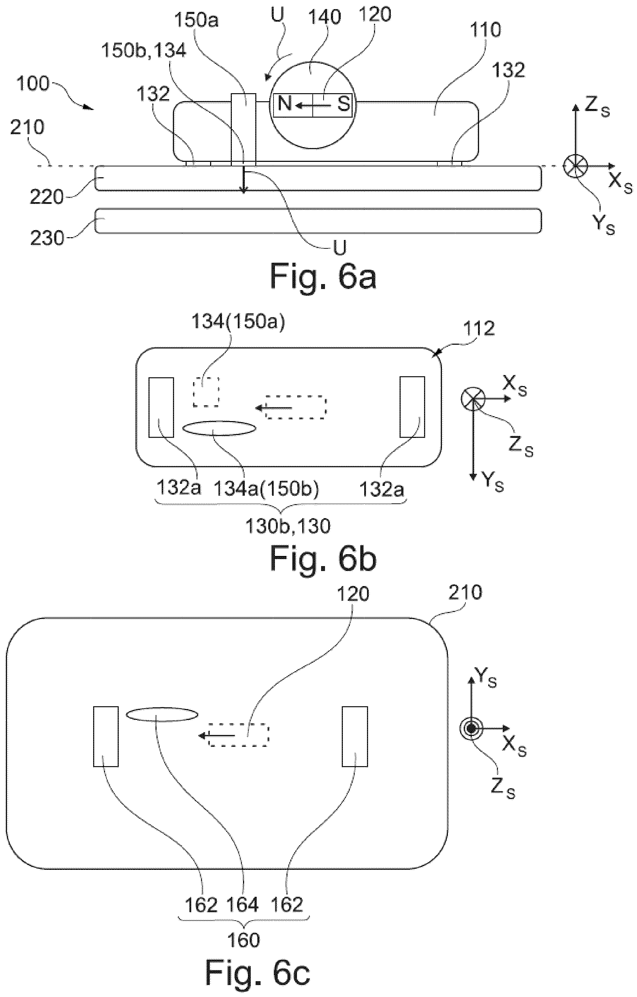

For instance, in the first **(****Figs. 2a, 2b, 2c****,** **3a, 3b, 3c****,** **4a, 4b, 4c****),** second **(****Figs. 5a, 5b, 5c****,)** and third **(****Figs. 6a, 6b, 6c****)** exemplary configurations of a user borne device 100, the at least one contact feature 132, 134, 136 coupled to the one manipulation feature 140, 150 is at least one movable contact feature 134. Upon actuation of the one manipulation feature 140, 150, the movable contact feature 134 is moved into a contact position. As mentioned before in the contact position, the at least one movable contact feature 134 defines an additional contact surface 134a of the contact surface 130. In these examples the one manipulation feature 140, 150 is a click manipulation feature 150. In other words the click manipulation feature 150 is operationally coupled to the movable contact feature 134.

In the first, second and third examples, the other manipulation feature 140, 150 is operationally coupled to the magnetic object 120. However, as mentioned before, in other embodiments, the other manipulation feature 140, 150 may be coupled to at least one other contact feature 132, 134, 136. In the shown examples, the other manipulation feature is a scroll manipulation feature 140. More specifically, the scroll manipulation feature 140 is configured as a scroll wheel 140. However, in other embodiments, the scroll manipulation feature 140 may be configured differently, e.g. as tiltable button or slidable button.

The user borne device 100 of the first, second and third examples, comprises two click manipulation features 150, 150a, 150b. At least one first movable contact feature 134 is operationally coupled to a first 150a of the two click manipulation features 150, 150a, 150b. At least one second movable contact feature 134 is operationally coupled to a second 150b of the two click manipulation features 150, 150a, 150b. In the first and third examples only one first movable contact feature 134 is operationally coupled to the first click manipulation feature 150a. In the first and third examples only one second movable contact feature 134 is operationally coupled to the second click manipulation feature 150b.

However, in other embodiments more than one contact feature, particularly more than one movable contact feature 134, may be operationally coupled to a click manipulation feature 150. As exemplary shown in the second example according to **Figs. 5a, 5b, 5c****,** the second click manipulation feature 150b is operationally coupled to two (second) movable contact features 134. **Figs. 5a, 5b, 5c** show the user borne device 100 in a state in which the second click manipulation feature 150b is actuated by a user U. Thereby, the two movable contact features 134 are moved into the contact position and define two additional contact surfaces 134a. In that regard **Fig. 5b** shows the bottom 112 of the user borne device 100 including the default contact surface 130a (exemplary formed by two static contact features 132) and the two additional contact surfaces 134a. Particularly, it is to be understood that the additional contact surfaces 134a and the default contact surface 130a may be located at different positions and/or regions on the bottom 112 in the surface plane as shown in **Fig. 5b****.** In other words, the contact surface 130 of the user borne device 100 according to **Fig. 5b** comprises the default contact surface 130a and the additional contact surfaces 134a to thereby create a modified contact surface 130b. The first movable contact feature 134, which is operationally coupled to the first click manipulation feature 150a is also depicted for illustrative purposes. As the first click manipulation feature 150a is not actuated, the first movable contact feature 134 is in non-contact position, and thus, does not form part of the contact surface 130. Therefore, the first contact feature 134 (of the first contact manipulation feature 150a) is merely depicted in dashed lines in **Fig. 5b****.** Similar explanations also apply to other figures showing contact features in non-contact position with dashed lines. For illustrative purposes the magnetic object 120 is also indicated by dashed lines in **Fig. 5b. Fig. 5c** shows the resulting pressure signature 160 including pressure regions corresponding to the default contact surface 130a (pressure regions 162) and the additional contact surfaces 134a (pressure regions 164). Furthermore, the projection of the magnetic object 120 on the interaction surface 210 is depicted in dashed lines. Thus, the tracking device 200 is able to detect the modified contact surface 130b as a change in in pressure signature 160 to thereby determine a user borne device characteristic, in this case a click event. The click event can be uniquely associated with the second click manipulation feature 150b due to the location of the pressure regions 162 and/or their number and/or size and/or shape.

Particularly, the second example configuration shows that the additional contact surface 134a may comprise several positionally separated contact regions depending on the number of movable contact features 134 and/or configuration of movable contact features 134. More generally, the user borne device 100 may comprise a plurality of movable contact features 134 defining a plurality of additional contact surfaces 134a and being operationally coupled to the one of the at least one scroll manipulation feature 140 and the at least one click manipulation feature 150.

In embodiments, the at least one first movable contact feature 134 and the at least one second movable feature 134 may differ in one or more of:
- a number of respective contact features,
- a surface form defined by the respective at least one contact feature,
- a surface size defined by the respective at least one contact feature, and/or
- a force applied on the respective at least one contact feature by actuation.

In embodiments, the application of different forces may be detectable by the tracking device 100 and may result in an increased pressure magnitude. The difference in force application on the respective contact feature 132, 134 may be realized by a longer contact feature 132, 134 in movement direction and/or by the implementation of a force amplifier such as a lever or a spring.

Analogous explanations apply to the other example configurations.

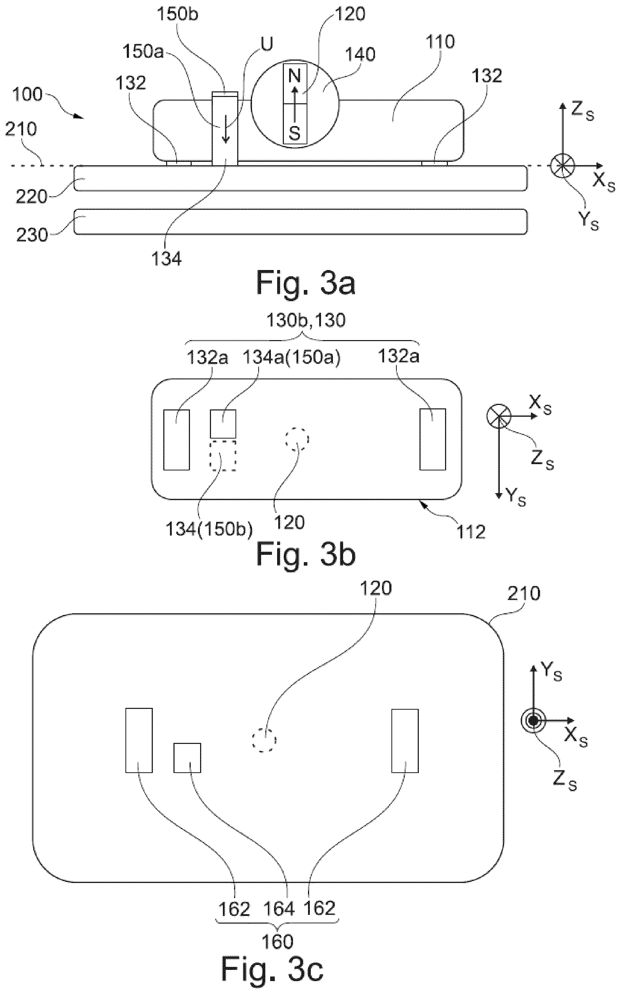

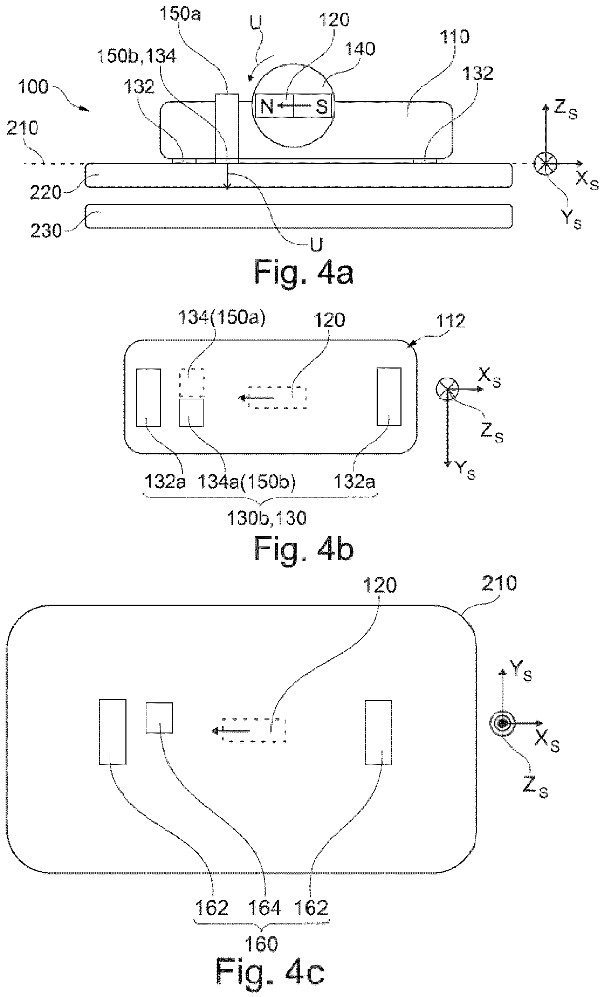

**Figs. 2a, 2b, 2c** show the first example configuration in an unactuated state. The two static contact features 132 form two static contact surfaces 132a defining the default contact surface 130a. The pressure signature 160 includes two pressure regions 162 corresponding to the default contact surface 130a. **Figs. 3a, 3b, 3c** show a first actuated state in which the first click manipulation feature 150a is actuated by a user U. The first movable contact feature 134 forms an additional contact surface 132a in the contact surface 130 of the user borne device 100. Thereby, compared to **Fig. 2b****,** a modified contact surface 130b is created. The pressure signature 160 is changed and includes two pressure regions 162 corresponding to the default contact surface 130a as well as a pressure region 164 corresponding to the additional contact surface 134a of first movable contact feature 134. **Figs. 4a, 4b, 4c** show a second actuated state in which the second click manipulation feature 150b is actuated by a user U. Hence, the second movable contact feature 134 coupled to the second click manipulation feature 150b is moved into a contact position. The pressure signature 160 is changed accordingly, and comprises a pressure region corresponding to the additional contact surface 134a of the second movable contact feature 134 (see, **Fig. 4c****)** which is different from the pressure region corresponding to the additional contact surface 134a of the first movable contact feature 134 (compared to **Fig. 3c****).** Furthermore, the scroll manipulation feature 140 is actuated which moves the magnetic object 120. In the shown example the scroll manipulation feature 140 changes an orientation of the magnetic object 120 which is detectable by the plurality of magnetometers 230. Thereby, a scroll event and a click event can be determined independently of each other.

**Figs. 6a, 6b, 6c** show the third example configuration in an actuated state in which the second click manipulation feature 150b is actuated by a user U. Accordingly, the second movable contact feature 134 is moved into contact position. The third example configuration differs from the first example configuration in that the additional contact surface 134a of the second movable contact feature 134 has a different shape and/or size (see, **Figs. 6b, 6c****)** than the additional contact surface 134a of the second movable contact feature 134 of the first example (see, **Figs. 4b, 4c****).** The tracking device 200 can thereby associate a click event with the second click manipulation feature 150b based on the unique shape and/or size of the pressure region 164 corresponding to the additional contact surface 134a of the second movable contact feature 134.

In both the second and third example configuration, the scroll manipulation feature 140 is also actuated by a user U. Thus, similar as with the first example configuration, the scroll manipulation feature 140 changes an orientation of the magnetic object 120 which is detectable by the plurality of magnetometers 230. Thereby, a scroll event and a click event can be determined independently of each other.

Although in the first, second and third example configurations, the two click manipulation features 150, 150a, 150b are coupled to at least one respective movable contact feature 134, in variations, the first click manipulation feature 150a may be coupled to a static contact feature 132 and/or the second click manipulation feature 150b may be coupled to a static contact feature 132.

Although being coupled to the magnetic object 120, in alternative embodiments the at least one scroll manipulation feature 140 may be operationally coupled to at least one other contact feature 134, 136. In such case, the magnetic object 120 may be fixedly coupled to the housing 110 or may be coupled to a scroll manipulation feature 150. If the at least one scroll manipulation feature 140 is coupled to at least one other contact feature 134, 136, the at least one other contact feature 134, 136 may be arranged and configured such that only upon actuation the at least one other contact feature 134, 136 forms part of the contact surface 130 of the user borne device 100. In such example embodiments, the at least one other contact feature 134, 136 being coupled to the scroll manipulation feature 140 may be configured as at least one other movable contact feature 134 (e.g. if the scroll manipulation feature 140 is configured as a tiltable button) or as at least one slidable contact feature 136 (e.g. if the scroll manipulation feature 140 is configured as a slidable button).

In alternative embodiments to the first, second and third example configurations, the magnetic object 120 may be coupled to the two click manipulation features 150, 150a, 150b. In such examples, for instance an actuation of the first click manipulation feature 150a may rotate the magnetic object 120 in a first direction and an actuation of the second click manipulation feature 150a may rotate the magnetic object 120 in a second direction. The at least one contact feature 134, 136 may be coupled to the scroll manipulation feature 140. Particularly, the at least one contact feature 134, 136 being coupled to the scroll manipulation feature 140 may be configured as at least one movable contact feature 134 (e.g. if the scroll manipulation feature 140 is configured as a tiltable button) or as at least one slidable contact feature 136 (e.g. if the scroll manipulation feature 140 is configured as a slidable button).

Describing the above explanations more generally, the tracking device 200 may be configured to identify at least one user borne device characteristic based on the determined pressure signature 160 and/or based on the obtained magnetic field measurements, particularly the determined location of the magnetic object 120 and/or the magnetic field strength of the magnetic object 120.

In embodiments, the tracking device 200 may be configured to distinguish between at least two user borne device characteristics based on pressure position information and/or pressure magnitude information. Specifically, wherein the tracking device 200 may be configured to identify one or more pressure regions 162, 164, 166 in the pressure signature 160 based on the pressure position information. More specifically, the tracking device 200 may be configured to identify at least one user borne device characteristic by comparing the identified one or more pressure regions 162, 164, 166 with a database. The database may comprise data associating at least one user borne device characteristic with a specific position, size, form and/or arrangement of one or more pressure regions 162, 164, 166. For instance two pressure regions 162, 164, 166 of predetermined size may be indicative of right and left mouse pad in the default contact surface 130a. For instance, when a left click trigger event occurs the size of the left pressure region may increase (more pressure pixels 222 activated). In some embodiments at the same time, the size of the right pressure region may decrease (less pressure pixels 222 activated). In other words, some pressure pixels 222 of the right pressure region get deactivated, e.g. due to deformation of the computer mouse and/or a slight tilt). Thus, in this embodiment, either an activation or a deactivation (or both) of pressure pixels 222 of predefined pressure regions 162, 164, 166 compared to database information may indicate a trigger event such as a click event and/or a scroll event.

A "pressure region 162, 164, 166" may be defined by one or more of adjacent activated pressure pixels 222. In some embodiments two activated pressure pixels 222 distanced by at most two pressure pixel pitches 224, in examples, distanced by at most one pressure pixel pitch 224 may still be assigned to the same pressure region 162, 164, 166. In some embodiments only directly adjacent activated pressure pixels 222 may be assigned to the same pressure region 162, 164, 166. In embodiments, "directly adjacent" may include both adjacent in xₛ- or yₛ- direction, and in a diagonal direction (via corners of the pressure pixels 222). The pressure region denoted with reference sign 162 corresponds to a static contact surface 132a. The pressure region denoted with reference sign 164 corresponds to an additional contact surface 134a. The pressure region denoted with reference sign 166 corresponds to a slidable contact surface 136a

In embodiments, the tracking device 200 may be configured to distinguish between at least two user borne device characteristics based on a comparison of the determined pressure signature 160 and the determined location of the magnetic object 120. This may be done, for instance, by comparison of pressure position information and/or pressure magnitude information of an identified (increased) pressure region 162, 164, 166 with a position and/or orientation and/or movement trajectory of the magnetic object 120. More generally, the tracking device 200 may be configured to identify at least one user borne device characteristic by comparing the identified one or more (increased) pressure regions 162, 164, 166 with a database and/or relative to the location of the magnetic object 120 (particularly the projection of the magnetic object 120 on the interaction surface 210). For instance, the tracking device 200 may be configured to determine a spatial relationship between the identified one or more (increased) pressure regions 162, 164, 166 and the location of the magnetic object 120 (particularly the projection of the magnetic object 120 on the interaction surface 210) and/or compare this spatial relationship to a database to determine at least one user borne device characteristic.

In some embodiments, the tracking device 200 may be configured to distinguish between at least two types of the user borne device 100 based on the obtained magnetic field measurements of the magnetic object 120. Particularly, the tracking device 200 may be configured to distinguish between at least two types of the user borne devices 100 based on a position and/or orientation of the magnetic object 120 and/or a magnetic strength of the magnetic object 120 determined based on the obtained magnetic field measurements. In some examples, the tracking device 200 may be configured to identify a type of user borne device 100 based on a detected magnetic strength of the magnetic object 120. As different user borne devices 100 can have different magnetic objects with different magnetic strengths, an identification of a specific user borne device 100 can in some embodiments simply be achieved by using the magnetic strength.

In embodiments, the tracking device 200 may be configured to distinguish between at least two types of the user borne device 100 based on the obtained magnetic field measurements of the magnetic object 120 and on the determined pressure signature 160. For instance, a specific position and/or orientation and/or magnetic strength of the magnetic object 120 relative to the pressure signature 160 (particularly the one or more pressure regions corresponding to the default contact surface 130a) may be indicative of a specific type of user borne device 100. In some embodiments, the tracking device 200 may be configured to identify at least one user borne device characteristic by comparing the identified one or more (increased) pressure regions 162, 164, 166 with a database and/or relative to the location of the magnetic object 120 (particularly the projection of the magnetic object 120 on the interaction surface 210) and/or its magnetic strength. For instance, the tracking device 200 may be configured to determine a spatial relationship between the identified one or more (increased) pressure regions 162, 164, 166 and the location of the magnetic object 120 (particularly the projection of the magnetic object 120 on the interaction surface 210) having a specific magnetic strength and/or compare this spatial relationship, optionally including the magnetic strength, to a database to determine at least one user borne device characteristic, specifically a model and/or type of user borne device 100.

In embodiments, the at least one static contact feature 132 of the default contact surface 130a and the at least one movable contact feature 134 are distanced from each other in the surface plane by at least one pressure pixel pitch 224, in examples, at least by two pressure pixel pitches 224. As mentioned above, a "pressure pixel pitch 224" may be understood as the distance between the centers of two directly adjacent pressure pixels 222. The distance between the contact features is to be understood as to refer to the closest distance between the (outer) boundary of the default contact surface 130a defined by the at least one static contact feature 132a, and the (outer) boundary of the additional contact surface 134a defined by the at least one movable contact feature 134. In case of several boundaries due to several contact regions defined by the respective one of the default contact surface 130a and the additional contact surface 134a, the respective two closest contact regions shall be considered. In the case of a contact region enclosing another contact region (see, e.g. **Figs. 7b****,** **8b****),** the distance shall refer to the closest distance between the respective boundaries. In the example of **Fig. 7b** it is to be understood that the distance refers to the closest distance between the boundary of the default contact surface 130a at its inner circumference and the boundary of the movable contact feature 134 (indicated by the dashed lines of 134). Similar explanations may hold for the distance between a slidable contact surface 136a and any of an additional contact surface 134a and/or the default contact surface 132a. Similar explanations may also hold for the distance between contact surfaces of the same type, e.g. between a first movable contact surface 134a and a second movable contact surface 134a These explanations may also apply to cases with several positionally separated contact regions, in which any of the slidable contact surface 136a, the additional contact surface 134a and/or the default contact surface 132a may comprise several positionally separated contact regions. Generally, the selection of the pressure pixel size (i.e. the dimensions of a pressure pixel) depends on the configuration and application of the user borne device 100. In some embodiments, the (x-y direction) pressure pixel size may be at least 1mm, for instance between 1mm and 5mm. In the example of 1mm size, the pressure pixel pitch 224 in x or y direction may then be 1mm, optionally plus the width of an optionally present isolation/space. The pressure pixel pitch 224 in the diagonal direction (in the example of a square shaped pressure pixel 222) may then be root 2 of 1 mm, optionally plus the (diagonal) width of an optionally present isolation/space.

Generally, the at least one static contact feature 132 of the default contact surface 130a and the at least one movable contact feature 134 may differ in one or more of:
- a number of respective contact features,
- a surface form defined by the respective at least one contact feature,
- a surface size defined by the respective at least one contact feature and/or
- a force applied on the respective at least one contact feature by actuation.

This allows for an easy distinction between default contact surface 130a and actuated contact surface, e.g. additional contact surface 134a.

Generally, the default contact surface 130a and the additional contact surface 134a may be arranged at predefined positions in the surface plane. Particularly, the default contact surface 130a and the additional contact surface 134a may be arranged at different positions in the surface plane.

A fourth example configuration of a user borne device 100 is shown in Figs. **7a, 7b, 7c****,** **8a, 8b, and 8c****.** While in the first, second and third example configuration, the user borne device 100 is configured as a computer mouse, in the fourth example configuration, the user borne device 100 is exemplary configured as a dial. **Figs. 7a, 7b, and 7c** show the fourth exemplary configuration in an unactuated state. **Fig. 7a** shows the user borne device 100 with a housing 110 and a static contact feature 132 formed at the bottom 112 of the housing 110. As shown in **Fig. 7b****,** the static contact feature 132 may exemplary form an annular static contact surface 132a which defines the default contact surface 130a. In other embodiments, the user borne device 100 may comprise more than one and/or a differently shaped, sized, and/or positioned static contact feature 132. For instance, the static contact feature 132 may define an annular contact surface 132a with a gap to indicate an orientation of the user borne device 100. The user borne device 100 comprises a click manipulation feature 150 and a scroll manipulation feature 140. In the exemplary shown dial configuration, the click and scroll manipulation features 140, 150 may be combined in one rotatable element which is also movable towards the bottom 112. Other dial embodiments may, however, comprise separate click and scroll manipulation features 140, 150 (see, e.g. **Fig. 9****).** The user borne device 100 of **Fig. 7a** also comprises a magnetic object 120. The click manipulation feature 150 is coupled to a movable contact feature 134 such that when it is actuated by a user U, the movable contact feature 134 is moved into a contact position (see, **Fig. 8a****).** The scroll manipulation feature 140 is coupled to the magnetic object 120 such that when it is actuated by a user U, the orientation of the magnetic object 120 is changed (see, **Fig. 8c****).** The change in orientation can be detected by the tracking device 200 to indicate a scroll event. The movement of the contact feature 134 into contact position creates an additional contact surface 134a which is detectable by the tracking device 200. More specifically, the tracking device can determine a pressure region 164 in the pressure signature 160 corresponding to the additional contact surface 134a (see, **Fig. 8b and 8c****).**

A fifth example configuration of a user borne device 100 is shown in Figs. **9a, 9b, and 9c****.** Exemplary the user borne device 100 is configured as a dial. The user borne device 100 of Figs. 9, comprises a housing 110 and a static contact feature 132 formed at the bottom 112 of the housing 110 similarly as in the fourth exemplary configuration. Also the user borne device 100 comprises a scroll manipulation feature 140 and a click manipulation feature 150. In the fifth example configuration the scroll manipulation feature 140 and the click manipulation feature 150 are separate elements. The scroll manipulation feature 140 comprises or is configured as a slidable button. The slidable button is actuatable in opposing first and second directions. The at least one contact feature 132, 134, 136, which is operationally coupled to the slidable button is at least one slidable contact feature 136. In the example of Figs. 9 one slidable contact 136 is provided which forms one slidable contact surface 136a (see, **Fig. 9b****).** The slidable contact feature 136 is coupled to the slidable button such that upon actuation in the first direction, the at least one contact feature 136 is moved along the bottom 112 in the first direction. The slidable contact feature 136 is coupled to the slidable button such that upon actuation in the second direction, the slidable contact feature 136 is moved along the bottom 112 in the second direction. In other words, the slidable contact feature 136 is coupled to the slidable button such that upon actuation, the slidable contact feature 136 is moved along the bottom 112 to another position. This possible movement is schematically indicated by the double arrow in **Figs. 9b, 9c****.** The movement or different positions of the slidable contact feature 136, particularly of its slidable contact surface 136a is detectable by the tracking device 200. Particularly, the tracking device 200 is configured to determine a pressure region 166 in the pressure signature 160 corresponding to the slidable contact surface 136a. In embodiments, the tracking device 200 may be configured to determine a pressure region 166 in the pressure signature 160 corresponding to the slidable contact surface 136a relative to the position and/or orientation of the magnetic object 120 of the user borne device 100. In some embodiments, the tracking device 200 may be configured to determine a movement direction (e.g. first or second direction) of the slidable contact feature 136 (particularly its slidable contact surface 136a) relative to an orientation of the magnetic object 120.

In the example of **Figs. 9****,** the click manipulation feature 150 is operationally coupled to the magnetic object 120. Exemplary the click manipulation feature 150 may be operationally coupled to the magnetic object 120, such that an actuation of a user causes a change in orientation of the magnetic object 120 as indicated by the double arrow in Fig. 9a. This change in orientation is detectable by the tracking device 200 and indicative of a click event. However, in other embodiments the actuation of a user may cause a change in position of the magnetic object 120. In further other embodiments, the click manipulation feature 150 may be coupled to at least one other contact feature 132, 134, 136. If the at least one click manipulation feature 150 is coupled to at least one other contact feature 132, 134, the at least one other contact feature 132, 134 may be arranged and configured such that, at least upon actuation, the at least one other contact feature 132, 134 forms part of the contact surface 130 of the user borne device 100. In this example, the at least one other contact feature 132, 136 being coupled to the click manipulation feature 150 may be configured as at least one static contact feature 132 or as at least one movable contact feature 134 (e.g. similar as in **Fig. 8a****).** The magnetic object 120 may be fixedly or movably coupled in the housing 110.

In the example of **Figs. 9****,** the slidable button may be denoted a rotational dial button. The opposing first and second directions may be opposing circumferential directions (or rotational directions). The slidable contact feature 136 may be moved along an arc shaped trajectory (in the contact surface plane). In some embodiments, instead of one, a plurality of slidable contact features 136 may be provided circumferentially and/or radially spaced. In other words, the user borne device 100 may comprise a plurality of slidable contact features 136 defining a plurality of slidable contact surfaces 136a and being operationally coupled the at least one scroll manipulation feature 140. In this regard, circumferential and radial may refer to a rotation axis of the slidable button. Thereby, the plurality of circumferentially and/or radially spaced slidable contact features 136 may define a plurality of circumferentially and/or radially spaced slidable contact surfaces 136a of the contact surface 130.

Generally, when the at least one slidable contact feature 136 is moved, the slidable contact surface 136a is moved relatively to the default contact surface 130a to thereby create a modified contact surface 130b. Particularly, it is to be understood that the slidable contact surface 136a and the default contact surface 130a may be located at different positions and/or regions on the bottom in the surface plane. The slidable contact surface 136a is movable to a different position and/or region on the bottom in the surface plane to be moved relatively to the default contact surface 130a. In such embodiments, the contact surface 130 is modified in respect to the slidable contact feature 136a being arranged at a different relative position with respect to the default contact surface 130a. Particularly, the total area of the contact surface 130 may remain the same even if the slidable contact feature 136a is moved.

Generally, the at least one static contact feature 132 of the default contact surface 130a and the at least one slidable contact feature 136 may differ in one or more of:
- a number of respective contact features,
- a surface form defined by the respective at least one contact feature, and/or
- a surface size defined by the respective at least one contact feature.

Generally, as mentioned before, the slidable contact feature 136 is to be understood as contact feature which is movable relative to the housing 110. In examples, the slidable contact feature 136 always forms part of the contact surface 130. The slidable contact feature 136 is movable along the bottom 112 of the user borne device 110, e.g. between a first end position and a second end position including various positions in between. In some embodiments, the slidable contact feature 136 may remain at the "another position" after actuation of the scroll manipulation feature 140. In other embodiments, the scroll manipulation feature 140 (and the slidable contact feature 136) may have an unactuated position from which it is movable in a first direction and/or in a second (opposing) direction to an actuated position which may be any position between a first end position and a second end position. The scroll manipulation feature 140 may comprise or be coupled to a biasing mechanism which is configured to urge the scroll manipulation feature 140 (and thereby also the slidable contact feature 136) from the actuated position to the unactuated position. The unactuated position may be defined as any position from the first end position to the second end position.

Alternatively to the rotational dial button, the slidable button may be a longitudinally movable button movable along a longitudinal trajectory in opposing directions between a first and a second end of the longitudinal trajectory (i.e. first end position and second end position).

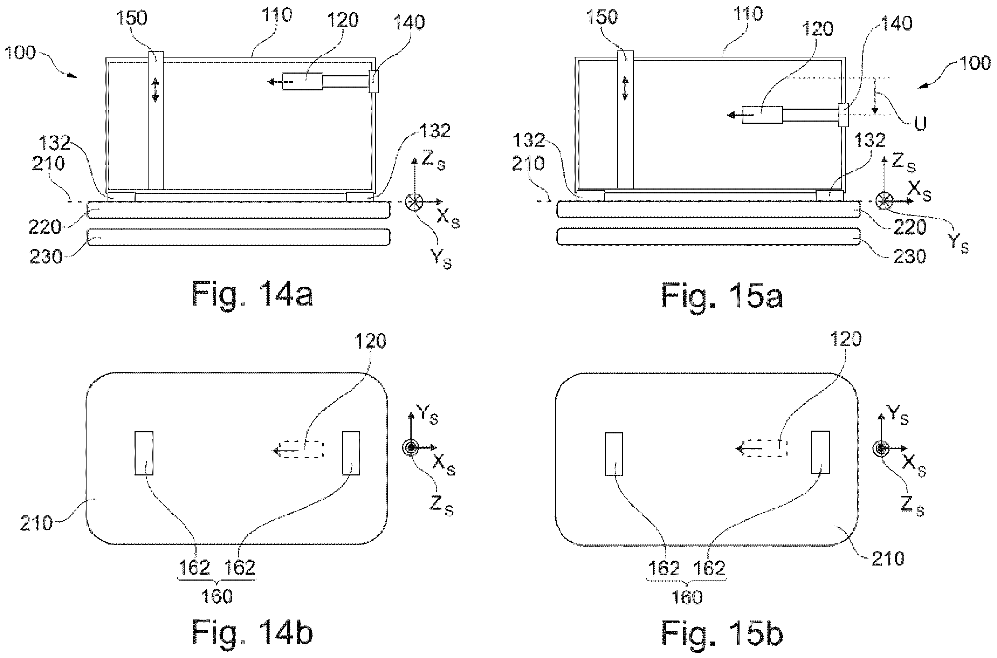

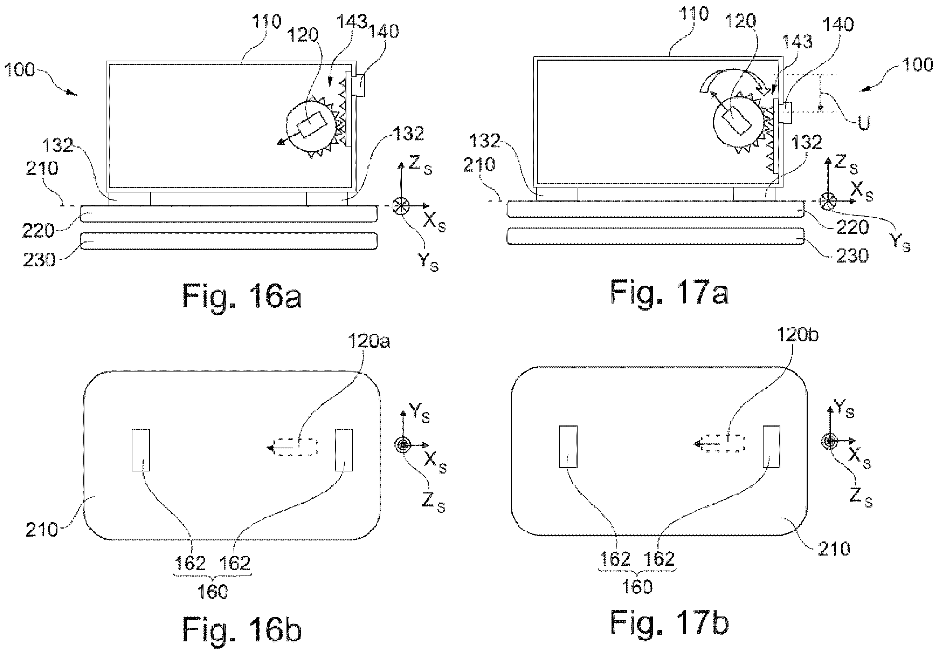

This is exemplary shown in the sixth **(****Figs. 10, 10b, 11a, 11b****),** seventh **(****Figs. 12a, 12b, 13a, 13b****),** eight **(****Figs. 14a, 14b, 15a, 15b****),** and ninth **(****Figs. 16a, 16b, 17a, 17b****)** exemplary configurations of a user borne device 100.

While in the sixth exemplary configuration, the scroll manipulation feature 140 (particularly the slidable button) is operationally coupled with a slidable contact feature 136, in the seventh, eight and ninth exemplary configurations the scroll manipulation feature 140 (particularly the slidable button) is operationally coupled with the magnetic object 120.

With regard to the sixth exemplary configuration, **Figs. 10a, 10b** show a first state in which the contact surface 130 is formed by the default contact surface 130a (exemplary formed by two static contact features 132, specifically two static contact surfaces 132a) and the slidable contact surface 136a. Figs. 11a, 11b show a second state in which the scroll manipulation feature 140 was actuated by a user U such that the slidable contact feature 136 is moved along the bottom 112 to another position. In other words, upon actuation of the scroll manipulation feature 140, the slidable contact feature 136 may be moved along a longitudinal trajectory (in the contact surface plane) in opposing directions between the first end and the second end. In the shown example, the longitudinal trajectory is straight, however, in other embodiments, the longitudinal trajectory may have another shape, e.g. curved. This movement and/or the "another" position can be determined by the tracking device 200 based on a change in the pressure signature 160 as it can be seen by comparing the pressure signature 160 of **Fig. 10b** with the pressure signature 160 of **Fig. 11b****.** In other words, the tracking device 200 is configured to determine a change of the pressure region 166 corresponding to the slidable contact surface 136a which may be indicative of a scroll event. Particularly, a position of the slidable contact surface 136a with respect to the default contact surface 130a may be determined.

In the sixth, seventh, and eight exemplary configurations, the user borne device 100 comprises also a click manipulation feature 150.

In the sixth exemplary configuration, the click manipulation feature 150 is operationally coupled to a static contact feature 132. The magnetic object 120 is fixedly coupled to the housing 110. Alternatively, the click manipulation feature 150 may be operationally coupled to the magnetic object 120 which may then be movably coupled to the housing. In other embodiments, the click manipulation feature 150 may be operationally coupled to at least one other movable contact feature 134. The tracking device 200 may be configured to determine further user borne device characteristics based on the obtained magnetic field measurements and/or based on the pressure signature 160.

Alternatively to the sixth example configuration, the magnetic object 120 may be coupled to the scroll manipulation feature 140 (particularly the slidable button). The at least one contact feature 132, 134, 136 may be coupled to another scroll manipulation feature (not shown), to the click manipulation feature (as shown in the seventh and eight embodiment). In the seventh and eight exemplary configuration, the at least one contact feature is a static contact feature 132 which is operationally coupled with the click manipulation feature 150 similar as in the sixth embodiment. Alternatively the click manipulation feature 150 may be operationally coupled with a movable contact feature 134. In the seventh exemplary configuration, the actuation of the slidable button 140 causes a movement of the magnetic object 120 in or parallel to a plane defined by the first device axis x_{d} and the second device axis y_{d}. A projection of the movement and/or position of the magnetic object 120 on the interaction surface 210 may allow for determining a user borne device characteristic. Particularly, a spatial relationship between the projection of the magnetic object 120 and the pressure signature 160 may be indicative of a user borne device characteristic, e.g. a scroll event and/or an orientation of the user borne device 100. In the eight exemplary configuration, the actuation of the slidable button 140 causes a movement of the magnetic object 120 orthogonal to a plane defined by the first device axis x_{d} and the second device axis y_{d}. This movement is detectable by tracking device 200 based on magnetic field measurements.

In some alternative embodiments, the user borne device 100 may only comprise the scroll manipulation feature 140 (particularly the slidable button) which is coupled to the magnetic object 120 as shown with respect to the ninth example configuration of **Figs. 16a, 16b, 17a, 17b****.** In this example configuration, the user borne device 100 may still comprise at least one static contact feature 132 which forms the default contact surface 130a. Based on the pressure signature 160 and/or the location of the magnetic object 120 at least one user borne device characteristic is still determinable by the tracking device 200. Although the slidable button comprises a transmission device 143 which translates a longitudinal movement of the slidable button 140 to a rotation of the magnetic object 120, in variations of this embodiment, the slidable button may cause a translational movement of the magnetic object 120 similar as in the seventh or eighth exemplary configuration.

Generally in some embodiments, the at least one scroll manipulation feature 140 may comprise or be a tiltable button. The tiltable button may be actuatable from a neutral position in opposing first and second directions. The at least one first contact feature 132, 134, 136, particularly at least one first movable contact feature 134, may be operationally coupled to the tiltable button such that upon actuation in the first direction, the at least one first contact feature 132, 134, 136 is moved into a contact position in which it defines an additional first contact surface 134a of the contact surface 130. At least one second contact feature 132, 134, 136, particularly at least one second movable contact feature 134, may be operationally coupled to the tiltable button such that upon actuation in the second direction, the at least one second contact feature 132, 134, 136 is moved into a contact position in which it defines an additional second contact surface 134a of the contact surface 130. In these embodiments, the at least one click manipulation feature may be operationally coupled either to at least one other contact feature 132, 134, 136 or to the magnetic object 120 (in such cases the magnetic object 120 may be movably coupled to the housing 110). If the at least one click manipulation feature 150 is operationally coupled to at least one other contact feature 132, 134, the at least one other contact feature 132, 134 may be arranged and configured such that at least upon actuation the at least one other contact feature 132, 134 forms part of the contact surface 130 of the user borne device 100. In this example, the at least one other contact feature 132, 134 being coupled to the click manipulation feature 150 may be configured as at least one static contact feature 132 or as at least one other movable contact feature 134.

In alternative embodiments comprising a tiltable button 140, the magnetic object 120 may be coupled to the tiltable button 140. The at least one contact feature 132, 134, 136 may be operationally coupled to the click manipulation feature 150.

In embodiments comprising a tiltable button 140, the at least one first contact feature 132, 134 and the at least one second contact feature 132, 134 may differ in one or more of:
- a number of respective contact features,
- a surface form defined by the respective at least one contact feature,
- a surface size defined by the respective at least one contact feature, and/or
- a force applied on the respective at least one contact feature by actuation.

In embodiments, the application of different forces may be detectable by the tracking device 100 and may result in an increased pressure magnitude. The difference in force application on the respective contact feature 132, 134 may be realized by a longer contact feature 132, 134 in movement direction and/or by the implementation of a force amplifier such as a lever or a spring.

Generally, in some embodiments the tracking device 200 may be configured for use with more than one user borne device 100. Particularly, the tracking device 200 may be configured to track a plurality of user borne devices 100. The tracking device 200 may be configured to determine a location of at least one magnetic object 120, particularly, a plurality of magnetic objects 120. Similarly, the tracking device 200 may be configured to determine the pressure signature 160 of at least one, particularly a plurality of user borne devices 100.

Generally, in some embodiments, the user borne device 100 may comprise at least one tiltable button 140, at least one slidable button 140, at least one scroll wheel 140 and/or at least one click manipulation feature 150. The tiltable button 140 may be coupled to at least one movable contact feature 134 or to the magnetic object 120. The slidable button 140 may be coupled to at least one slidable contact feature 136 or to the magnetic object 120. The scroll wheel 140 may be coupled to at least one movable contact feature 134 (e.g. via a translation device 143) or to the magnetic object 120. The click manipulation feature 150 may be coupled to at least one static contact feature 132, to at least one movable contact feature 134, or to the magnetic object 120. In some embodiments, the user borne device 100 may comprise more than one magnetic object 120.

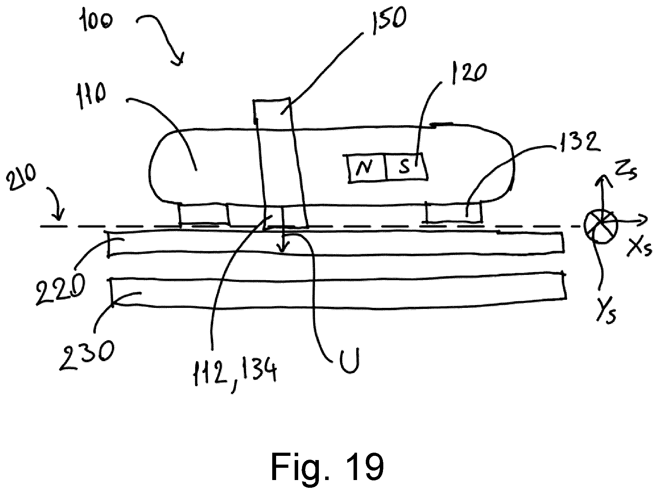

In some alternative embodiments, the user borne device 100 may only comprise either at least one, particularly only one, scroll manipulation feature 140 or at least one, particularly only one, click manipulation feature 150. Particularly, the tracking device 200 may be configured to track a user borne device 100 which comprises either at least one, particularly only one, scroll manipulation feature 140 or at least one, particularly only one, click manipulation feature 150. Particularly, the system 10 may comprise a user borne device 100 which comprises either at least one, particularly only one, scroll manipulation feature 140 or at least one, particularly only one, click manipulation feature 150. Such a user borne device 100 may (apart from only having either scroll or click manipulation feature(s)) be configured similarly or identically as the user borne device 100 disclosed with respect to the figures. In embodiments (see, Fig. 19), the user borne device 100 may be configured as a dial but only comprise a click manipulation feature 150. Similar as shown in the fourth exemplary dial configuration of Figs. 7 and 8, one element which is movable towards the bottom 112 may be provided which acts as the click manipulation feature 150. In contrast to the fourth embodiment, however, this one element (click manipulation feature 150) is rotationally fixed with respect to the housing 110. Thus a rotation of the housing 110 or the click manipulation feature 150 rotates the whole user borne device 100.

Although the present invention has been described above and is defined in the attached claims, it should be understood that the invention may alternatively be defined in accordance with the following embodiments:
1. A user borne device (100) for use on an interaction surface (210) of a tracking device (200), the tracking device (200) comprising a pressure sensor matrix (220) and a plurality of magnetometers (230), wherein the user borne device (100) comprises:
   - a housing (110) having a bottom (112) defining a contact surface (130) of the user borne device (100), wherein the user borne device (100) is configured to be operable on the interaction surface (210) via the contact surface (130);
   - a magnetic object (120) coupled to the housing (110), wherein the magnetic object (120) is configured to create a magnetic field;
   - at least one scroll manipulation feature (140) and at least one click manipulation feature (150) actuatable by a user (U);
   - wherein one of the at least one scroll manipulation feature (140) and the at least one click manipulation feature (150) is operationally coupled to at least one contact feature (132, 134, 136) which is arranged and configured such that at least upon actuation the at least one contact feature (132, 134, 136) forms part of the contact surface (130) of the user borne device (100).
2. The user borne device (100) of embodiment 1, wherein the contact surface (130) comprises a default contact surface (130a) formed by at least one static contact feature (132) fixedly arranged at the bottom (112).
3. The user borne device (100) of embodiment 2, wherein the default contact surface (130a) is formed by a plurality of static contact features (132).
4. The user borne device (100) of any one of the preceding embodiments, wherein the at least one contact feature (132, 134, 136) coupled to the one of the at least one scroll manipulation feature (140) and the at least one click manipulation feature (150) is at least one movable contact feature (134) which, upon actuation, is moved into a contact position in which it defines an additional contact surface (134a) of the contact surface (130).
5. The user borne device (100) of embodiment 4, comprising a plurality of movable contact features (134) defining a plurality of additional contact surfaces (134a) and being operationally coupled to the one of the at least one scroll manipulation feature (140) and the at least one click manipulation feature (150).
6. The user borne device (100) of any one of the preceding embodiments, if at least dependent on embodiments 2 and 4, wherein, when the at least one movable contact feature (134) is moved into the contact position, the contact surface (130) of the user borne device (100) comprises the default contact surface (130a) and the additional contact surface (134a) to thereby create a modified contact surface (130b).
7. The user borne device (100) of any one of the preceding embodiments, if at least dependent on embodiments 2 and 4, wherein the at least one static contact feature (132) of the default contact surface (130a) and the at least one movable contact feature (134) differ in one or more of:
   - a number of respective contact features,
   - a surface form defined by the respective at least one contact feature,
   - a surface size defined by the respective at least one contact feature and/or
   - a force applied on the respective at least one contact feature by actuation.
8. The user borne device (100) of any one of the preceding embodiments, wherein the user borne device comprises two click manipulation features (150, 150a, 150b), wherein at least one first contact feature (132, 134, 136), particularly at least one first movable contact feature (134), is operationally coupled to a first (150a) of the two click manipulation features (150, 150a, 150b), and wherein at least one second contact feature (132, 134, 136), particularly at least one second movable contact feature (134), is operationally coupled to a second (150b) of the two click manipulation features (150, 150a, 150b).
9. The user borne device (100) of any one of embodiments 1 to 7, wherein the at least one scroll manipulation feature (140) comprises a tiltable button, wherein the tiltable button is actuatable from a neutral position in opposing first and second directions,
   wherein at least one first contact feature (132, 134, 136), particularly at least one first movable contact feature (134), is operationally coupled to the tiltable button such that upon actuation in the first direction, the at least one first contact feature (132, 134, 136) is moved into a contact position in which it defines an additional first contact surface (134a) of the contact surface (130),
   and wherein at least one second contact feature (132, 134, 136), particularly at least one second movable contact feature (134), is operationally coupled to the tiltable button such that upon actuation in the second direction, the at least one second contact feature (132, 134, 136) is moved into a contact position in which it defines an additional second contact surface (134a) of the contact surface (130).
10. The user borne device (100) of any one of embodiments 8 or 9, wherein the at least one first contact feature (132, 134) and the at least one second contact feature (132, 134) differ in one or more of:
   - a number of respective contact features,
   - a surface form defined by the respective at least one contact feature,
   - a surface size defined by the respective at least one contact feature, and/or
   - a force applied on the respective at least one contact feature by actuation.
11. The user borne device (100) of any one of embodiments 1 to 3, wherein the at least one contact feature (132, 134, 136) is coupled to the at least one scroll manipulation feature (140), and is at least one slidable contact feature (136) which defines a slidable contact surface (136a) of the contact surface (130), and which, upon actuation, is moved along the bottom (112) to another position.
12. The user borne device (100) of embodiment 11, comprising a plurality of slidable contact features (136) defining a plurality of slidable contact surfaces (136a) and being operationally coupled the at least one scroll manipulation feature (140).
13. The user borne device (100) of any one of embodiments 11 or 12, if at least dependent on embodiment 2, wherein, when the at least one slidable contact feature (136) is moved, the slidable contact surface (136a) is moved relatively to the default contact surface (130a) to thereby create a modified contact surface (130b).
14. The user borne device (100) of any one of embodiments 11 to 13, if at least dependent on embodiment 2, wherein the at least one static contact feature (132) of the default contact surface (130a) and the at least one slidable contact feature (136) differ in one or more of:
   - a number of respective contact features,
   - a surface form defined by the respective at least one contact feature, and/or
   - a surface size defined by the respective at least one contact feature.
15. The user borne device (100) of any one of embodiments 1 to 3 or 11 to 14, wherein the at least one scroll manipulation feature (140) comprises a slidable button, wherein the slidable button is actuatable in opposing first and second directions,
   wherein at least one contact feature (132, 134, 136), particularly at least one slidable contact feature (136), is operationally coupled to the slidable button such that upon actuation in the first direction, the at least one contact feature (136) is moved along the bottom (112) in the first direction, and such that upon actuation in the second direction, the at least one contact feature (136) is moved along the bottom (112) in the second direction.
16. The user borne device (100) of any one of the preceding embodiments, wherein the housing (110) defines a first device axis (x_{d}), a second device axis (y_{d}) orthogonal to the first device axis (x_{d}), and a vertical device axis (z_{d}) which is orthogonal to a surface plane of the contact surface (130) of the user borne device (100), the surface plane being identic or parallel to a plane defined by the first device axis (x_{d}) and the second device axis (y_{d}).
17. The user borne device (100) of embodiment 16, if at least dependent on embodiments 2 and 4, wherein the default contact surface (130a) and the additional contact surface (134a) are arranged at predefined positions in the surface plane.
18. The user borne device (100) of any of embodiments 16 or 17, if at least dependent on embodiment 11, wherein the slidable contact surface (136a) is movable along predefined positions in the surface plane.
19. The user borne device (100) of any one of the preceding embodiments, wherein the magnetic object (120) is movably coupled to the housing (110), and
   - wherein the other of the at least one scroll manipulation feature (140) and the at least one click manipulation feature (150) is operationally coupled to the magnetic object (120) such that an actuation causes movement of the at least one magnetic object (120) with respect to the housing (110).
20. The user-borne device (100) of embodiment 19, wherein the magnetic object (120) is movable along a predefined movement trajectory, and
   wherein the contact surface (130) is arranged at predefined positions relative to the movement trajectory of the at least one magnetic object (120).
21. The user-borne device (100) of any one of the preceding embodiments, wherein the at least one magnetic object (120) is a permanent magnet.
22. The user borne device (100) of any one of the preceding embodiments, wherein the user borne device (100) is electrically and/or electronically passive.
23. The user-borne device (100) of any one of the preceding embodiments, wherein the user borne device comprises only one magnetic object (120).
24. The user-borne device (100) of any one of the preceding embodiments, wherein the user borne device (100) is a dial or a computer mouse.
25. A tracking device (200) for tracking a user borne device (100), the user borne device (100) defining a contact surface (130) and having a magnetic object (120), the tracking device (200) comprising:
   a pressure sensor matrix (220) comprising a plurality of pressure pixels (222) and defining an interaction surface (210) on which the user borne device (100) is operable via its contact surface (130), the pressure sensor matrix (220) being configured to detect a pressure exerted on the interaction surface (210),
   a plurality of magnetometers (230) configured to obtain magnetic field measurements associated with the magnetic object (120),
   wherein the tracking device (200) is configured to determine a location of the magnetic object (120) based on the obtained magnetic field measurements,
   wherein the tracking device (200) is configured to determine a pressure signature (160) of the user borne device (100) based on the detected pressure exerted on the interaction surface (210), and
   wherein the tracking device (200) is configured to identify at least one user borne device characteristic at least based on the determined pressure signature (160).
26. The tracking device (200) of embodiment 25, wherein the tracking device (200) is configured to identify at least one user borne device characteristic based on the determined pressure signature (160) and/or based on the obtained magnetic field measurements, particularly the determined location of the magnetic object (120).
27. The tracking device (200) of any one of embodiments 25 or 26, wherein determining a location of the magnetic object (120) comprises determining a position and/or orientation of the magnetic object (120).
28. The tracking device (200) of any one of embodiments 25 to 27, wherein the at least one user borne device characteristic comprises one or more of:
   - a position of the user borne device (100) on the interaction surface (210),
   - an orientation of the user borne device (100) in a plane defined by a first surface axis (xₛ) and a second surface axis (yₛ) of the interaction surface (210),
   - a type of the user borne device (100),
   - a contact of the user borne device (100), particularly its default contact surface (130a), with the interaction surface (210),
   - a trigger event initiated by a user manipulation of the at least one user-borne device (100), and/or
   - a characteristic of a trigger event.
29. The tracking device (200) of any one of embodiments 25 to 28, wherein the pressure signature (160) is indicative of that portion of the contact surface (130) which is in contact with the interaction surface (210).
30. The tracking device (200) of any one of embodiments 25 to 29, wherein the pressure signature (160) includes pressure position information and pressure magnitude information of that portion of the contact surface (130) which is in contact with the interaction surface (210).
31. The tracking device (200) of embodiment 30, wherein pressure position information comprises information on each of the plurality of pressure pixels (222) of the pressure sensor matrix (220) which were activated in reaction to the exerted pressure.
32. The tracking device (200) of any one of embodiments 30 or 31, wherein the tracking device (200) is configured to distinguish between at least two user borne device characteristics based on pressure position information and/or pressure magnitude information.
33. The tracking device (200) of any one of embodiments 30 to 32, wherein the tracking device (200) is configured to identify one or more pressure regions (162, 164, 166) in the pressure signature (160) based on the pressure position information.
34. The tracking device (200) of embodiment 33, wherein the tracking device (200) is configured to identify at least one user borne device characteristic by comparing the identified one or more pressure regions (162, 164, 166) with a database.
35. The tracking device (200) of any one of embodiments 30 to 34, wherein the tracking device (200) is configured to identify one or more increased pressure regions in the pressure signature (160) based on the pressure magnitude information.
36. The tracking device (200) of embodiment 35, wherein the tracking device (200) is configured to identify at least one user borne device characteristic by comparing the identified one or more increased pressure regions (168) with a database.
37. The tracking device (200) of any one of embodiments 30 to 36, wherein the tracking device (200) is configured to identify at least one user borne device characteristic by comparing the pressure magnitude information with a database.
38. The tracking device (200) of any one of embodiments 25 to 37, wherein the tracking device (200) is configured to distinguish between at least two user borne device characteristics based on a comparison of the determined pressure signature (160) and the determined location of the magnetic object (120).
39. The tracking device (200) of any one of embodiments 25 to 38, if at least dependent on embodiment 28, wherein the tracking device (200) is configured to distinguish between at least two types of the user borne device (100) based on the obtained magnetic field measurements of the magnetic object (120), particularly based on an orientation of the magnetic object (120) and/or a magnetic strength of the magnetic object (120) determined based on the obtained magnetic field measurements.
40. The tracking device (200) of any one of embodiments 25 to 39, wherein the tracking device (200) comprises or is connectable to a processing unit (300) to determine the location of the magnetic object (120) and to determine the pressure signature (160).
41. The tracking device (200) of any one of embodiments 25 to 40, wherein the tracking device (200) is configured to track the user borne device (100) of any one of embodiments 1 to 24.
42. The tracking device (200) of any one of embodiments 25 to 41, wherein the tracking device (200) is configured to track a plurality of user borne devices (100).
43. A system (10) for tracking a user borne device (100), the system (10) comprising:
   a tracking device (200) of any one of embodiments 25 to 42, and
   a user borne device (100), particularly of any one of embodiments 1 to 24,
   wherein, when the user borne device (100) is operated on the interaction surface (210), an exerted pressure of the user borne device (100) is indicative of the at least one user borne device characteristic which is determinable by the system (10).
44. The system (10) of embodiment 43, wherein the actuation of the at least one scroll manipulation feature (140) or of the at least one click manipulation feature (150) is indicative of a trigger event determinable by the system (10).
45. The system (10) of any one of embodiments 43 or 44, if at least dependent on embodiments 2 and 4, wherein the at least one static contact feature (132) of the default contact surface (130a) and the at least one movable contact feature (134) are distanced from each other in the surface plane by at least one pressure pixel pitch (224), specifically at least by two pressure pixel pitches (224).
46. The system (10) of any one of embodiments 43 to 45, further comprising an electronics device wherein the tracking device (200) is arranged at or in a device body of the electronic device, and optionally wherein the electronics device comprises or is a notebook, a laptop, a smartphone, a screen, a board or a tablet.
47. The system (10) of any one of embodiments 43 to 46 further comprising an output device (400), wherein the output device (400) is configured to visually reproduce the user borne device (100) as a virtual object, more specifically wherein the system (10) is configured to reproduce a pressure signature (160) and a location of the at least one magnetic object (120) on the output device (400).
48. The system (10) of any one of embodiments 43 to 47, wherein, during a user operation, the system (10) is configured to track a movement and/or manipulation of the user borne device (100) on the interaction surface (210) over a time period.

## Claims

1. A user borne device (100) for use on an interaction surface (210) of a tracking device (200), the tracking device (200) comprising a pressure sensor matrix (220) and a plurality of magnetometers (230), wherein the user borne device (100) comprises:
- a housing (110) having a bottom (112) defining a contact surface (130) of the user borne device (100), wherein the user borne device (100) is configured to be operable on the interaction surface (210) via the contact surface (130);
- a magnetic object (120) coupled to the housing (110), wherein the magnetic object (120) is configured to create a magnetic field;
- at least one scroll manipulation feature (140) and at least one click manipulation feature (150) actuatable by a user (U);
- wherein one of the at least one scroll manipulation feature (140) and the at least one click manipulation feature (150) is operationally coupled to at least one contact feature (132, 134, 136) which is arranged and configured such that at least upon actuation the at least one contact feature (132, 134, 136) forms part of the contact surface (130) of the user borne device (100).

2. The user borne device (100) of claim 1, wherein the contact surface (130) comprises a default contact surface (130a) formed by at least one static contact feature (132) fixedly arranged at the bottom (112).

3. The user borne device (100) of any one of the preceding claims, wherein the at least one contact feature (132, 134, 136) coupled to the one of the at least one scroll manipulation feature (140) and the at least one click manipulation feature (150) is at least one movable contact feature (134) which, upon actuation, is moved into a contact position in which it defines an additional contact surface (134a) of the contact surface (130).

4. The user borne device (100) of any one of the preceding claims, if at least dependent on claims 2 and 3, wherein, when the at least one movable contact feature (134) is moved into the contact position, the contact surface (130) of the user borne device (100) comprises the default contact surface (130a) and the additional contact surface (134a) to thereby create a modified contact surface (130b).

5. The user borne device (100) of any one of the preceding claims, if at least dependent on claims 2 and 4, wherein the at least one static contact feature (132) of the default contact surface (130a) and the at least one movable contact feature (134) differ in one or more of:
- a number of respective contact features,
- a surface form defined by the respective at least one contact feature,
- a surface size defined by the respective at least one contact feature and/or
- a force applied on the respective at least one contact feature by actuation.

6. The user borne device (100) of any one of the preceding claims, wherein the user borne device comprises two click manipulation features (150, 150a, 150b), wherein at least one first contact feature (132, 134, 136), particularly at least one first movable contact feature (134), is operationally coupled to a first (150a) of the two click manipulation features (150, 150a, 150b), and wherein at least one second contact feature (132, 134, 136), particularly at least one second movable contact feature (134), is operationally coupled to a second (150b) of the two click manipulation features (150, 150a, 150b).

7. The user borne device (100) of any one of the preceding claims, wherein the at least one scroll manipulation feature (140) comprises a tiltable button, wherein the tiltable button is actuatable from a neutral position in opposing first and second directions,
wherein at least one first contact feature (132, 134, 136), particularly at least one first movable contact feature (134), is operationally coupled to the tiltable button such that upon actuation in the first direction, the at least one first contact feature (132, 134, 136) is moved into a contact position in which it defines an additional first contact surface (134a) of the contact surface (130),
and wherein at least one second contact feature (132, 134, 136), particularly at least one second movable contact feature (134), is operationally coupled to the tiltable button such that upon actuation in the second direction, the at least one second contact feature (132, 134, 136) is moved into a contact position in which it defines an additional second contact surface (134a) of the contact surface (130).

8. The user borne device (100) of any one of claims 1 to 2, wherein the at least one contact feature (132, 134, 136) is coupled to the at least one scroll manipulation feature (140), and is at least one slidable contact feature (136) which defines a slidable contact surface (136a) of the contact surface (130), and which, upon actuation, is moved along the bottom (112) to another position.

9. The user borne device (100) of any one of claims 1 to 2 or 8, wherein the at least one scroll manipulation feature (140) comprises a slidable button, wherein the slidable button is actuatable in opposing first and second directions,
wherein at least one contact feature (132, 134, 136), particularly at least one slidable contact feature (136), is operationally coupled to the slidable button such that upon actuation in the first direction, the at least one contact feature (136) is moved along the bottom (112) in the first direction, and such that upon actuation in the second direction, the at least one contact feature (136) is moved along the bottom (112) in the second direction.

10. The user borne device (100) of any one of the preceding claims, wherein the magnetic object (120) is movably coupled to the housing (110), and
- wherein the other of the at least one scroll manipulation feature (140) and the at least one click manipulation feature (150) is operationally coupled to the magnetic object (120) such that an actuation causes movement of the at least one magnetic object (120) with respect to the housing (110).

11. A tracking device (200) for tracking a user borne device (100), the user borne device (100) defining a contact surface (130) and having a magnetic object (120), the tracking device (200) comprising:
a pressure sensor matrix (220) comprising a plurality of pressure pixels (222) and defining an interaction surface (210) on which the user borne device (100) is operable via its contact surface (130), the pressure sensor matrix (220) being configured to detect a pressure exerted on the interaction surface (210),
a plurality of magnetometers (230) configured to obtain magnetic field measurements associated with the magnetic object (120),
wherein the tracking device (200) is configured to determine a location of the magnetic object (120) based on the obtained magnetic field measurements,
wherein the tracking device (200) is configured to determine a pressure signature (160) of the user borne device (100) based on the detected pressure exerted on the interaction surface (210), and
wherein the tracking device (200) is configured to identify at least one user borne device characteristic at least based on the determined pressure signature (160).

12. The tracking device (200) of claims 11, wherein the at least one user borne device characteristic comprises one or more of:
- a position of the user borne device (100) on the interaction surface (210),
- an orientation of the user borne device (100) in a plane defined by a first surface axis (xₛ) and a second surface axis (yₛ) of the interaction surface (210),
- a type of the user borne device (100),
- a contact of the user borne device (100), particularly its default contact surface (130a), with the interaction surface (210),
- a trigger event initiated by a user manipulation of the at least one user-borne device (100), and/or
- a characteristic of a trigger event.

13. The tracking device (200) of any one of claims 11 to 12, wherein the pressure signature (160) includes pressure position information and pressure magnitude information of that portion of the contact surface (130) which is in contact with the interaction surface (210), optionally wherein the tracking device (200) is configured to distinguish between at least two user borne device characteristics based on pressure position information and/or pressure magnitude information.

14. The tracking device (200) of claim 11, if at least dependent on claim 12, wherein the tracking device (200) is configured to distinguish between at least two types of the user borne device (100) based on the obtained magnetic field measurements of the magnetic object (120), particularly based on an orientation of the magnetic object (120) and/or a magnetic strength of the magnetic object (120) determined based on the obtained magnetic field measurements.

15. A system (10) for tracking a user borne device (100), the system (10) comprising:
a tracking device (200) of any one of claims 11 to 13, and
a user borne device (100), particularly of any one of claims 1 to 10, wherein, when the user borne device (100) is operated on the interaction surface (210),
an exerted pressure of the user borne device (100) is indicative of the at least one user borne device characteristic which is determinable by the system (10).
